# EUROPEAN PATENT APPLICATION

(11) **EP 4 779 426 A1**
(43) Date of publication of application: **22.07.2026**
(21) Application number: 24864776.0
(22) Date of filing: 14.09.2024
(51) Int. Cl.: G05D 1/43

(54) **AUTONOMOUS ROBOT AND PATH PLANNING METHOD**

(30) Priority: 16.09.2023 CN 202311197205; 16.09.2023 CN 202311196313; 20.09.2023 CN 202311218750; 13.06.2024 CN 202410760357
(71) Applicant: Positec Power Tools (Suzhou) Co., Ltd., Suzhou, Jiangsu 215123 (CN)
(72) Inventor: ZHOU, Bin, Suzhou, Jiangsu 215123 (CN); WANG, Xiao, Suzhou, Jiangsu 215123 (CN); WANG, Yuanyuan, Suzhou, Jiangsu 215123 (CN); CHAO, Peidong, Suzhou, Jiangsu 215123 (CN)
(74) Representative: Kilburn & Strode LLP
(86) International application number: PCT/CN2024/119120
(87) International publication number: WO 2025/056061

(57) **Abstract**

The present application relates to an autonomous robot and a path planning method. The autonomous robot includes: a sensor (3), configured to collect environmental information; a memory (4), configured to store a map of a working area surrounding a current position of the autonomous robot; and a processor (2), wherein the processor (2) is in signal communication with the sensor (3) and the memory (4), and the processor (2) is configured to: determine that the autonomous robot encounters an obstacle based on the environmental information, wherein the obstacle includes a non-working object; in response to the autonomous robot encountering the obstacle, control the autonomous robot to turn; record a position of the autonomous robot in the map when the autonomous robot is turning, wherein the position is a turning position; and in response to detecting that the autonomous robot performs multiple turnings within a limited time or area, control the autonomous robot to move in a direction away from an area formed by a plurality of turning positions to escape. The present application can help the autonomous robot smoothly escape from a trapped area.

## Description

### TECHNICAL FIELD

The present disclosure relates to the field of automatic control technology, and particularly relates to an autonomous robot and a path planning method.

### BACKGROUND

As intelligent devices have become more widely adopted in daily life, autonomous moving devices, for example, an automatic lawn mower for garden maintenance and a robot vacuum for household floor cleaning, have also become popular among users.

An autonomous moving device usually moves and/or works within a working area. Taking an automatic lawn mower as an example, the automatic lawn mower can travel on a user's lawn and perform a cutting operation, thereby automating lawn cutting, which can greatly save manpower.

### SUMMARY

An object of the present application is to provide an autonomous robot and a path planning method, where the method can help the autonomous robot smoothly escape from a trapped area, and then facilitate completion of mowing work in remaining areas by the autonomous robot, and improving operational efficiency and user experience.

According to a first aspect of an embodiment of the present disclosure, an autonomous robot is provided, wherein the autonomous robot comprises:
a sensor, configured to collect environmental information;
a memory, configured to store a map of a working area surrounding a current position of the autonomous robot; and
a processor, wherein the processor is in signal communication with the sensor and the memory, and the processor is configured to:
   determine that the autonomous robot encounters an obstacle based on the environmental information, wherein the obstacle includes a non-working object;
   in response to the autonomous robot encountering the obstacle, control the autonomous robot to turn;
   record a position of the autonomous robot in the map when the autonomous robot is turning, wherein the position is a turning position; and
   in response to detecting that the autonomous robot performs multiple turnings within a limited time or area, control the autonomous robot to move in a direction away from an area formed by a plurality of turning positions to escape, wherein the plurality of turning positions correspond to the multiple turnings.

In one embodiment of the present application, to detect that the autonomous robot performs the multiple turnings within the predetermined time or area, the processor is configured to:
detect that a distribution density of the plurality of turning positions is greater than a preset threshold.

In one embodiment of the present application, to detect that the distribution density of the plurality of turning positions is greater than the preset threshold, the processor is configured to:
detect that an area of a region formed by N consecutive turning positions is smaller than a first preset threshold, or has a sudden change and is smaller than an area of a region formed by other N consecutive turning positions, wherein N is greater than or equal to 3.

In one embodiment of the present application, to detect that the distribution density of the plurality of turning positions is greater than the preset threshold, the processor is configured to:
detect that distances between N consecutive turning positions are smaller than a second preset threshold, wherein N is greater than or equal to 3.

In one embodiment of the present application, the processor is further configured to:
record a time when the autonomous robot turns or a sequence of the plurality of turning positions.

In one embodiment of the present application, to control the autonomous robot to move in the direction away from the area formed by the plurality of turning positions to escape, the processor is configured to:
generate an escape path based on the current position of the autonomous robot and a target turning position previous to the plurality of turning positions; and
control the autonomous robot to move along the escape path.

In one embodiment of the present application, to generate the escape path based on the current position of the autonomous robot and the target turning position previous to the plurality of turning positions, the processor is configured to:
when reaching the current position, in response to detecting that the area of the region formed by N consecutive turning positions is smaller than the area of the region formed by other N consecutive turning positions, obtain a turning position recorded first in a detected region with a larger area as the target turning position; and
generate the escape path based on the current position and the target turning position.

In one embodiment of the present application, to generate the escape path based on the current position of the autonomous robot and the target turning position previous to the plurality of turning positions, the processor is configured to:
when reaching the current position, in response to detecting that the area of the region formed by N consecutive turning positions is greater than a third preset threshold, obtain a turning position recorded first in a detected region as the target turning position; and
generate the escape path based on the current position and the target turning position.

In one embodiment of the present application, the processor is further configured to:
record a movement path when the autonomous robot moves.

In one embodiment of the present application, to generate the escape path based on the current position of the autonomous robot and a turning position previous to the plurality of turning positions, the processor is configured to:
obtain a shortest path in the movement path that passes through the current position and the target turning position, and use the shortest path as the escape path.

In one embodiment of the present application, to control the autonomous robot to move along the escape path, the processor is configured to:
during a process of controlling the autonomous robot to move along the escape path, if no obstacle is identified through ensor data collected in real time within a preset time period, determine that an escape is successful.

In one embodiment of the present application, the processor is further configured to:
in response to the autonomous robot escaping successfully, set a region containing the plurality of turning positions as a restricted area on the map; and
when detecting that the autonomous robot reaches the restricted area, control the autonomous robot to turn or move along a boundary of the restricted area.

In one embodiment of the present application, the processor is further configured to:
in response to the autonomous robot failing to escape, control the autonomous robot to move along a boundary of the obstacle; and
during a movement, identify an obstacle-free area through collected sensor data, and control the autonomous robot to travel to the obstacle-free area to enable the autonomous robot to escape, wherein the obstacle-free area is a spatial region where distances between obstacles are not smaller than a body width of the autonomous robot.

In one embodiment of the present application, the processor is further configured to:
in response to the autonomous robot failing to escape, control the autonomous robot to move along a boundary of the obstacle; and
when identifying through collected sensor data during a movement that the autonomous robot moves to a vicinity of the target turning position, determine that the autonomous robot escapes successfully.

In one embodiment of the present application, the processor is further configured to:
in response to the autonomous robot escaping successfully, control the autonomous robot to enter a random mode; wherein in the random mode, the autonomous robot randomly moves in a direction until the obstacle is identified.

In one embodiment of the present application, the sensor comprises at least one of an imaging sensor, an ultrasonic sensor, a laser sensor, or a radar sensor.

In one embodiment of the present application, the map is periodically updated.

According to a second aspect of an embodiment of the present disclosure, a path planning method is provided, wherein the method is applied to an autonomous robot, and the method comprises:
determining that the autonomous robot encounters an obstacle based on environmental information, wherein the obstacle includes a non-working object;
in response to the autonomous robot encountering the obstacle, controlling the autonomous robot to turn;
recording a position of the autonomous robot in a map when the autonomous robot is turning, wherein the position is a turning position; and
in response to detecting that the autonomous robot performs multiple turnings within a limited time or area, controlling the autonomous robot to move in a direction away from an area formed by a plurality of turning positions to escape, wherein the plurality of turning positions correspond to the multiple turnings.

According to a third aspect of an embodiment of the present disclosure, a control method for an autonomous moving robot is provided, comprising:
executing a turning strategy based on an identified non-grass object; and
in response to the autonomous moving robot satisfying an escape condition when executing the turning strategy, executing an escape strategy;
wherein the escape strategy comprises:
   obtaining a movement path of the autonomous moving robot traveling to a current position;
   controlling the autonomous moving robot to move backward along the movement path, and obtaining environmental information around the autonomous moving robot in real time; and
   based on the environmental information, determining whether a passable path that allows turning and passing through exists, so that the autonomous moving robot escapes from a current turning trapped area.

As a further improvement of the present disclosure, the control method further comprises marking a turning position when executing the turning strategy based on the identified non-grass object; and
the escape strategy comprises:
obtaining a turning position temporally adjacent to the current position;
obtaining a movement path of the autonomous moving robot traveling from the turning position to the current position; and
controlling the autonomous moving robot to move backward along the movement path to the turning position, and adjusting a pose of the autonomous moving robot at the turning position, so that the autonomous moving robot avoids a turning trapped position and continues to operate.

As a further improvement of the present disclosure, the escape condition at least comprises that the autonomous moving robot is turning trapped when executing the turning strategy or that the autonomous moving robot consecutively executes the turning strategy multiple times in a current area.

According to a fourth aspect of an embodiment of the present disclosure, an autonomous moving robot for automatically walking and working within a working area is provided, comprising:
a body; and
a controller, disposed on the body;
wherein the controller is configured to:
   control the autonomous moving robot to execute a turning strategy based on an identified non-grass object; and
   in response to the autonomous moving robot satisfying an escape condition when executing the turning strategy, control the autonomous moving robot to execute an escape strategy;
   wherein the escape strategy comprises:
      obtaining a movement path of the autonomous moving robot traveling to a current position; controlling the autonomous moving robot to move backward along the movement path, and obtaining environmental information around the autonomous moving robot in real time; and based on the environmental information, determining whether a passable path that allows turning and passing through exists, so that the autonomous moving robot escapes from a current turning trapped area.

Compared with conventional techniques, in the present disclosure, determining that an autonomous robot encounters an obstacle based on environmental information; in response to the autonomous robot encountering the obstacle, controlling the autonomous robot to turn; recording a turning position of the autonomous robot in a map when the autonomous robot is turning; and in response to detecting that the autonomous robot performs multiple turnings within a predetermined time or area, controlling the autonomous robot to move in a direction away from an area formed by a plurality of turning positions to escape. Using a turning position of the autonomous robot to find an escape direction, rather than random collision or direct return along an original path, improves a working efficiency of the autonomous robot. The present disclosure can help the autonomous robot smoothly escape from a trapped area, and then facilitate completion of mowing work in remaining areas by the autonomous robot, effectively improving the working efficiency of the autonomous robot, and enhancing a user-friendliness of the autonomous robot.

The control method provided by the present disclosure, by controlling an autonomous moving robot to use a historical trajectory in combination with a collection of environmental information, enables the autonomous moving robot to quickly exit a current area along a movement path, and turn to drive away from the current area after escaping from the area, avoiding re-entering the trapped area by mistake, further improving an efficiency of the autonomous moving robot to escape.

To overcome a defect of conventional techniques, a problem to be solved by an embodiment of the present disclosure is to improve a working efficiency.

In one embodiment, a control method is provided, applied to an autonomous moving device, wherein the autonomous moving device is configured to move and/or work in a working area, and the autonomous moving device is provided with a sensing module, and the control method comprises: controlling the autonomous moving device to move in the working area; obtaining sensing information based on the sensing module; and when determining that the autonomous moving device satisfies a predicament condition based on the sensing information, executing an escape step to control the autonomous moving device to drive away from a predicament area; wherein the predicament area is an area that limits a movement range of the autonomous moving device, the predicament area has at least one predicament object, and the at least one predicament object comprises a predicament obstacle and/or a predicament boundary.

In one embodiment, the predicament condition comprises: the autonomous moving device maintains a target position relationship with a non-grass object, a target angle is greater than a first threshold, and a spatial parameter corresponding to a target trajectory is smaller than a second threshold; or, the autonomous moving device maintains the target position relationship with the non-grass object, the target angle is greater than the first threshold, and a target duration is smaller than a third threshold; wherein the target position relationship is that the non-grass object is located on a first side of the autonomous moving device, the target angle is a cumulative turning angle of the autonomous moving device during a process of maintaining the target position relationship, the target trajectory is a movement trajectory of the autonomous moving device during the process of maintaining the target position relationship, and the target duration is a cumulative duration of maintaining the target position relationship.

In one embodiment, executing the escape step to control the autonomous moving device to drive away from the predicament area comprises: when the autonomous moving device satisfies the predicament condition and a first preset condition, obtaining a real-time image, and controlling the autonomous moving device to drive away from the predicament area according to the real-time image.

In one embodiment, the first preset condition comprises: a maximum side length of a target polygon is smaller than a fourth threshold; wherein the target polygon is a circumscribing polygon of the target trajectory.

In one embodiment, obtaining the real-time image and controlling the autonomous moving device to drive away from the predicament area according to the real-time image comprises: obtaining the real-time image; determining a first opening according to the real-time image, wherein the first opening corresponds to a grass area between adjacent predicament objects; and controlling the autonomous moving device to move toward the first opening and pass through the first opening to drive away from the predicament area according to the real-time image.

In one embodiment, determining the first opening according to the real-time image comprises: converting the real-time image into a raster image, wherein the raster image comprises a grass raster and a non-grass raster, the grass raster represents a grass object, and the non-grass raster represents a non-grass object; and determining the first opening in the raster image according to a relative position relationship between the grass raster and the non-grass raster.

In one embodiment, controlling the autonomous moving device to move toward the first opening and pass through the first opening comprises: determining a target direction based on the first opening in the raster image; controlling the autonomous moving device to move toward the target direction to control the autonomous moving device to move to the first opening; and controlling the autonomous moving device to advance to pass through the first opening.

In one embodiment, the control method further comprises: when movement information satisfies the first preset condition, obtaining a first map, and controlling the autonomous moving device to avoid an obstacle based on the first map.

In one embodiment, the first map is periodically updated.

In one embodiment, executing the escape step to control the autonomous moving device to drive away from the predicament area comprises: when the autonomous moving device satisfies a third preset condition, controlling the autonomous moving device to move backward and turn, wherein the third preset condition comprises that the autonomous moving device continuously performs multiple turnings in opposite directions.

In one embodiment, executing the escape step to control the autonomous moving device to drive away from the predicament area comprises: when the autonomous moving device satisfies the predicament condition and does not satisfy the first preset condition, obtaining a second map, and controlling the autonomous moving device to drive away from the predicament area according to the second map; wherein satisfying the first preset condition represents that the autonomous moving device is located in a first predicament area, not satisfying the first preset condition represents that the autonomous moving device is located in a second predicament area, a predicament area parameter of the first predicament area is smaller than a predicament area parameter of the second predicament area, and the predicament area parameter represents at least one of an area, a length, and a width of the predicament area.

In one embodiment, controlling the autonomous moving device to drive away from the predicament area according to the second map comprises: determining a second opening according to the second map, wherein the second opening corresponds to a grass area between adjacent predicament objects, and the second opening satisfies a position constraint condition; and controlling the autonomous moving device to move toward the second opening and pass through the second opening to drive away from the predicament area according to the second map.

In one embodiment, the position constraint condition comprises: no predicament object exists within a surrounding preset range, the second opening is located in a boundary area between the predicament object and the grass area, and opposite sides are interconnected.

In one embodiment, controlling the autonomous moving device to drive away from the predicament area according to the second map comprises: controlling the autonomous moving device to travel along the predicament object according to the second map; and when a third opening is detected, controlling the autonomous moving device to move toward the third opening and pass through the third opening to drive away from the predicament area, wherein the third opening corresponds to a grass area between adjacent predicament objects.

In one embodiment, controlling the autonomous moving device to drive away from the predicament area according to the second map comprises: if the autonomous moving device fails to successfully pass through the third opening within a preset duration, returning to a step of controlling the autonomous moving device to travel along the predicament object according to the second map.

In one embodiment, the control method comprises: when a position of the autonomous moving device is located outside a space corresponding to the target trajectory, determining that the autonomous moving device successfully escapes.

In one embodiment, a control apparatus is further provided, applied to an autonomous moving device, wherein the autonomous moving device is configured to move and/or work in a working area, and the autonomous moving device is provided with a sensing module, and the control apparatus comprises: a first control module, configured to control the autonomous moving device to move in the working area; the sensing module, configured to obtain sensing information; and a second control module, configured to execute an escape step to control the autonomous moving device to drive away from a predicament area when determining that the autonomous moving device satisfies a predicament condition based on the sensing information; wherein the predicament area is an area that limits a movement range of the autonomous moving device, the predicament area has at least one predicament object, and the at least one predicament object comprises a predicament obstacle and/or a predicament boundary.

In one embodiment, a computer-readable storage medium is provided, wherein the storage medium stores a computer program, and the computer program is configured to execute the method.

In one embodiment, an autonomous moving device is provided, comprising: a processor; and a memory for storing a processor-executable instruction; wherein the processor is configured to execute the method.

An embodiment of the present disclosure improve cutting coverage and user satisfaction.

To overcome a defect of conventional techniques, a problem to be solved by the present application is to provide an automatic working method and an autonomous moving device for an efficient escape.

A technical solution adopted by the present application to solve a problem of conventional techniques is an automatic working method, wherein the automatic working method is applied to an autonomous moving device, the autonomous moving device travels and/or works in a working area defined by a map, and the method comprises: when detecting that the autonomous moving device is trapped, obtaining the map, wherein an obstacle is marked in the map; obtaining an unmarked area on the map; and controlling the autonomous moving device to travel toward the unmarked area to escape.

In one embodiment, before obtaining the unmarked area on the map, the method further comprises: enlarging the obstacle on the map, wherein an enlargement factor is approximately equal to a coverage area of the autonomous moving device on the map; and
correspondingly, obtaining the unmarked area on the map and controlling the autonomous moving device to travel toward the unmarked area to escape comprises: obtaining an uncovered area on the map; and controlling the autonomous moving device to travel toward the uncovered area to escape.

In one embodiment, before enlarging the obstacle on the map, the method comprises: obtaining a first search range of the obstacle in the map, wherein the first search range is greater than an area covered by the autonomous moving device on the map; and determining an area covered by the autonomous moving device on the map when the autonomous moving device reaches an obstacle position in the first search range.

In one embodiment, if no uncovered area exists on the map, the method further comprises: obtaining a second search range of the obstacle in the map, wherein the second search range is greater than an area covered by the autonomous moving device on the map, and the second search range is smaller than the first search range; and determining an area covered by the autonomous moving device on the map when the autonomous moving device reaches an obstacle position in the second search range.

In one embodiment, the method comprises: when detecting that the autonomous moving device is trapped, determining a traveling direction when the autonomous moving device travels, wherein the traveling direction comprises a traveling linear velocity direction; and correspondingly, obtaining the first search range of the obstacle in the map comprises: obtaining an obstacle in an area near a direction opposite to the traveling direction in the map.

In one embodiment, before obtaining the unmarked area on the map, the method further comprises: simulating an area covered by the autonomous moving device on the map when the autonomous moving device is located at the obstacle position; and correspondingly, obtaining the unmarked area on the map and controlling the autonomous moving device to travel toward the unmarked area to escape comprises: obtaining an uncovered area on the map; and controlling the autonomous moving device to travel toward the uncovered area to escape.

In one embodiment, the method further comprises: when a sensor installed on the autonomous moving device detects at least one of following fault types during travel, marking an area near a geographical position of the sensor as an obstacle on the map, wherein the at least one of the following fault types comprises: detecting an obstacle, detecting that the autonomous moving device is lifted, or detecting that a motor torque changes.

In one embodiment, the method further comprises: according to a fault type identified by the sensor, marking an obstacle type while marking the obstacle in the map; and correspondingly, controlling the autonomous moving device to travel toward the unmarked area to escape comprises: when the autonomous moving device cannot escape, deleting an obstacle marking satisfying the obstacle type in the map; and controlling the autonomous moving device to travel toward the unmarked area to escape.

In one embodiment, the method further comprises: when a traveling wheel motor torque of the autonomous moving device is greater than a preset threshold, obtaining a traveling speed, a traveling direction, and a first area covered on the map by the autonomous moving device; simulating a second area covered on the map by the autonomous moving device after the autonomous moving device travels in the traveling direction at the traveling speed for a preset time; determining an area in the second area that is not covered by the first area; and marking the uncovered area as an obstacle.

In one embodiment, simulating the area covered by the autonomous moving device on the map when the autonomous moving device is located at the obstacle position comprises: obtaining an obstacle position closest to the autonomous moving device in various directions; and determining an area covered by the autonomous moving device on the map when the autonomous moving device is located at the closest obstacle position.

In one embodiment, controlling the autonomous moving device to travel toward the unmarked area to escape comprises: obtaining a distance between a current traveling direction of the autonomous moving device and a target traveling area; determining a traveling angular velocity and a traveling linear velocity when the autonomous moving device travels toward the target traveling area according to the distance, wherein the traveling angular velocity is positively correlated with the distance, and the traveling linear velocity is negatively correlated with the distance; and controlling the autonomous moving device to travel toward the target traveling area to escape according to the traveling angular velocity and the traveling linear velocity.

In one embodiment, after detecting that the autonomous moving device is trapped, if the autonomous moving device travels at least a first preset distance without detecting an abnormality when performing an escape action, determining that the autonomous moving device successfully escapes.

In one embodiment, after determining that the autonomous moving device successfully escapes, marking an area covered in the map when the autonomous moving device is detected to be trapped as an obstacle.

In one embodiment, after determining that the autonomous moving device successfully escapes, when detecting that the autonomous moving device travels to a second preset distance from a trapped position, deleting an obstacle marked in the map by a sensor installed on the autonomous moving device due to detecting a fault.

Another technical solution adopted by the present application to solve a problem of conventional techniques is an autonomous moving device, wherein the autonomous moving device travels and/or works in a working area defined by a map, and the autonomous moving device comprises: a controller, wherein when the controller detects that the autonomous moving device is trapped, the controller obtains the map, wherein an obstacle is marked in the map, obtains an unmarked area on the map, and controls the autonomous moving device to travel toward the unmarked area to escape.

Compared with conventional techniques, a beneficial effect of the present application is: when detecting that an autonomous moving device is trapped, obtaining a map and an area on the map that is not marked by an obstacle; and controlling the autonomous moving device to travel toward the unmarked area to escape. When the above scenario occurs, a related sensor needs to quickly identify the above trapped situation. When the trapped situation is identified, according to a marking condition of the obstacle on the map, the autonomous moving device is controlled to travel toward the unmarked area to escape. By adopting this method, a lawn mower can quickly escape, improving a working efficiency.

### BRIEF DESCRIPTION OF DRAWINGS

The objects, technical solutions, and beneficial effects of the present application described above can be clearly obtained through a detailed description of specific embodiments capable of implementing the present application described below, combined with a description of the drawings.

Same reference numerals and symbols in the drawings and a specification are used to represent same or equivalent elements.
FIG. 1 is a structural schematic diagram of an autonomous robot in an embodiment of the present disclosure.
FIG. 2 is a first schematic diagram of the autonomous robot in FIG. 1 executing a path planning method in a working area.
FIG. 3 is a flow schematic diagram of a path planning method of the present disclosure.
FIG. 4 is a second schematic diagram of the autonomous robot of the present disclosure executing a path planning method in a working area.
FIG. 5 is a functional structure schematic diagram of an autonomous robot in an embodiment of the present disclosure.
FIG. 6 is a schematic diagram of a path planning method in a specific application scenario of the present disclosure.
FIG. 7 is a schematic diagram of a lawn mower moving within a working area provided by an exemplary embodiment of the present application.
FIG. 8 is a structural schematic diagram of an autonomous moving device provided by an embodiment of the present application.
FIG. 9 is a schematic diagram of a movement trajectory of a lawn mower in a predicament area provided by an embodiment of the present application.
FIG. 10 is a schematic diagram of a lawn mower trapped in a corner provided by an embodiment of the present application.
FIG. 11 is a schematic diagram of a position of a second opening found by a lawn mower provided by an embodiment of the present application.
FIG. 12 is a schematic diagram of a lawn mower escaping from a third opening provided by an embodiment of the present application.
FIG. 13 is an application scenario schematic diagram of an embodiment of the present application.
FIG. 14 is an automatic working method schematic diagram of an embodiment of the present application.
FIG. 15 is an obstacle marking schematic diagram of an embodiment of the present application.
FIGS. 16-18 are escape scenario and sector schematic diagrams of an embodiment of the present application.

### DETAILED DESCRIPTION

To facilitate an understanding of the present application, the present application will be described more comprehensively below with reference to relevant drawings. Example embodiments of the present application are shown in the drawings. However, the present application can be implemented in many different forms and is not limited to the embodiments described herein. On the contrary, these embodiments are provided to make a disclosure of the present application more thorough and comprehensive. The embodiments provided in this specification can be combined with each other.

In the present application, unless otherwise clearly specified and limited, terms such as "install", "connect", "connection", and "fix" should be understood in a broad sense. For example, the terms may be fixed detachable, or integral; the terms can be a mechanical connection or an electrical connection; the terms can be directly connected or indirectly connected through an intermediate medium, or the terms can be an internal communication between two elements or an interactive relationship between two elements, unless otherwise clearly limited. For a person of ordinary skill in the art, specific meanings of the above terms in the present application can be understood according to specific circumstances.

The terms "first" and "second" are used for descriptive purposes only and cannot be understood as indicating or implying a relative importance or implicitly indicating a number of indicated technical features. Thus, a feature defined with "first" and "second" may explicitly or implicitly include at least one of the features. In a description of the present application, "a plurality of" means at least two, for example, two, three, etc., unless otherwise clearly and specifically limited.

Unless otherwise defined, all technical and scientific terms used herein have the same meanings as commonly understood by a person skilled in a technical field of the present application. The terms used in a specification of the present application are only for a purpose of describing specific embodiments and are not intended to limit the present application. The term "and/or" used herein includes any and all combinations of one or more related listed items.

An autonomous robot of the present disclosure is at least configured to perform a working task, such as mowing, within a working area. Usually, in a random mode, the autonomous robot can start from any starting position and randomly operate in a preset direction, and identify a working object and a non-working object in the working area, for example, a grass and a non-grass object, and then control the autonomous robot to change a direction and move when the non-working object is identified, so as to complete the working task in the working area during a random operation.

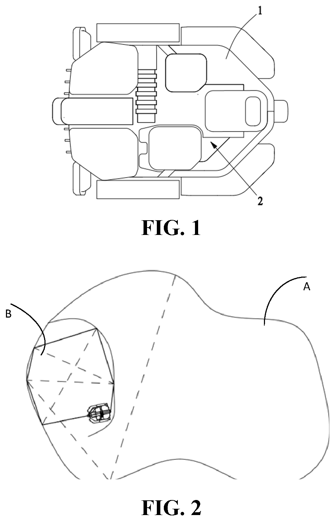

Considering that the autonomous robot will be trapped in a narrow working area when randomly operating in the working area, causing an abnormal mowing work and an inability to complete a corresponding work efficiently and quickly, a user experience is reduced. Specifically, the autonomous robot may enter an area B which is relatively small and easily trapped. As shown in FIG. 2, the autonomous robot drives from an area A with a larger area into the area B with a smaller area. In the area B, the autonomous robot will turn countless times until the autonomous robot drives away from the area B, or even if the autonomous robot turns countless times, the autonomous robot cannot drive away from the area B. In an above process, on one hand, the autonomous robot will spend a lot of time causing a working efficiency of the autonomous robot to decrease; on another hand, due to a frequent stay of the autonomous robot in the area B, the area B is over-mowed. Based on this, the present disclosure provides a path planning method and an autonomous robot applying the path planning method.

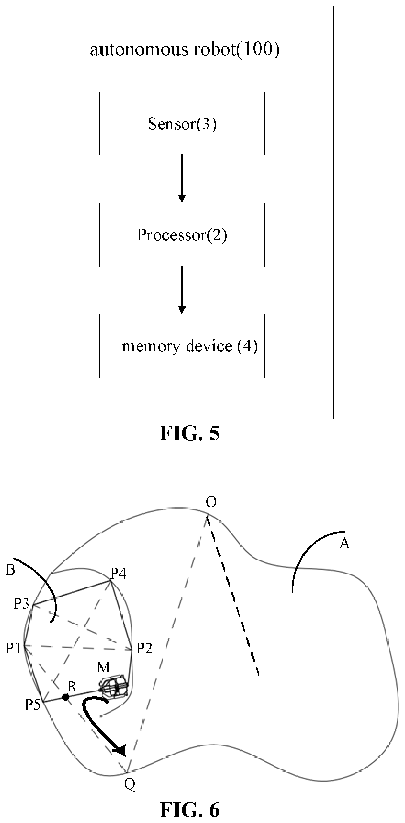

Please refer to FIG. 1 and FIG. 5, which show an autonomous robot provided by an embodiment of the present disclosure, hat is configured to autonomously travel and operate within a working area. The autonomous robot comprises a body 1, a processor 2, a memory 4, and a sensor 3 disposed on the body 1. The sensor 3 is used to collect an environmental condition of the working area and transmit the environmental condition to the processor 2 for processing. The processor 2 identifies an obstacle in the working area, namely a non-working object, according to the environmental condition, so as to control the body 1 to move randomly within the working area, thereby completing a mowing task in the working area.

It should be noted that in a specification of the present disclosure, an autonomous robot 100 comprising the body 1, the processor 2, the memory 4, and the sensor 3 is taken as an example for illustration, and the autonomous robot is described as an automatic lawn mower. The autonomous robot can also be a cleaning robot, etc. In an embodiment of the present disclosure, the autonomous robot may also comprise a moving component for driving the body 1 to move, such as a traveling wheel; an energy component for providing energy for an operation of the autonomous robot, such as a battery pack; and a working head for performing a corresponding mowing work and other conventional structures of an existing lawn mower. Since aforementioned structures/components are mature structures in a field of autonomous robots, the aforementioned structures/components will not be elaborated in the specification of the present disclosure.

In the present disclosure, the body 1 at least comprises a first housing and a second housing that are coupled together. The first housing and the second housing are coupled together to form a receiving space to at least accommodate the processor 2.

The sensor 3 is used to collect environmental information during a working process of the autonomous robot. The sensor 3 can be set above the body 1 or accommodated in the body 1 according to a type of a signal the sensor 3 collects. That is, in the present disclosure, a setting position and a type of the sensor 3 can be selected according to an actual need, without limitation. In one embodiment, the sensor 3 may comprise but is not limited to at least one of: an imaging sensor, an ultrasonic sensor, a laser sensor, a radar sensor, an inertial navigator, a collision sensor, a torque sensor, a GPS, an RTK, a magnetic sensor, or a radar sensor. The inertial navigator may comprise an IMU and an ODO.

The memory 4 is configured to store a map of a working area surrounding a current position of the autonomous robot, as well as information such as an obstacle collected by the sensor 3. The map can be established through an image collected by the sensor 3 or satellite positioning data, etc. The map can be a local map containing an area surrounding the current position of the autonomous robot, and is periodically updated as a position of the autonomous robot changes. Saving only the local map can save a memory space.

The processor 2 is used to control the autonomous robot to move in the working area and complete a corresponding mowing and a maintenance. The processor 2 can be an embedded Digital Signal Processor (DSP), a Micro Processor Unit (MPU), an Application Specific Integrated Circuit (ASIC), a Programmable Logic Device (PLD), a System on Chip (SOC), a Central Processing Unit (CPU), or a Field Programmable Gate Array (FPGA), etc.

The processor 2 can determine that the autonomous robot encounters an obstacle based on environmental information, and can also control a work of the autonomous robot according to a preset program or a received instruction. In an embodiment of the present disclosure, the processor 2 can also be used to execute a path planning method to control the autonomous robot during a random operation in the working area, so that if the autonomous robot is trapped, a path planning can be quickly performed to escape from a trapped area. A processor having an above obstacle identification and a path planning function can be divided into two parts, where one part is integrated with the sensor 3, that is, the sensor 3 has a function of collecting environmental information and processing the collected environmental information to identify whether the autonomous robot encounters an obstacle; and another part exists independently for the path planning. The processor having the above obstacle identification and the path planning function can also be integrated together and exist independently as a whole.

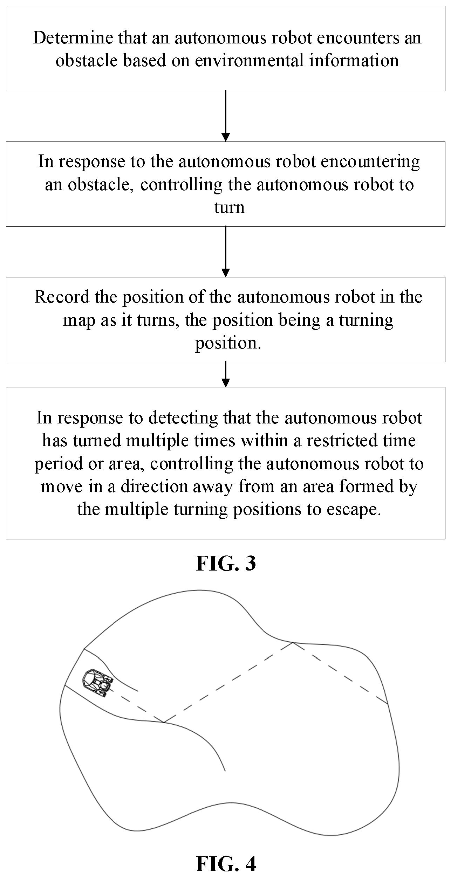

Please refer to FIGS. 2 and 3. In the present disclosure, the processor 2 can be configured to:
determine that the autonomous robot encounters an obstacle based on environmental information, wherein the obstacle comprises a non-working object;
in response to the autonomous robot encountering the obstacle, control the autonomous robot to turn;
record a position of the autonomous robot in a map when the autonomous robot is turning, wherein the position is a turning position; and
in response to detecting that the autonomous robot performs multiple turnings within a limited time or area, control the autonomous robot to move in a direction away from an area formed by a plurality of turning positions to escape, wherein the plurality of turning positions correspond to the multiple turnings.

In a disclosed embodiment, in response to detecting that the autonomous robot performs the multiple turnings within the limited time or area, the autonomous robot is controlled to move in a direction away from an area formed by a plurality of turning positions corresponding to the multiple turnings to escape. By controlling the autonomous robot to move in a direction toward an area where a turning position previous to the plurality of turning positions is located, the autonomous robot can escape as quickly as possible.

In the present disclosure, an obstacle comprises a non-working object. In a working scenario of a lawn mower, the non-working object is a non-grass object. The non-grass object mainly refers to an object in a working area that the autonomous robot cannot handle, such as a road, a stone, etc. Specifically, when the autonomous robot moves in the working area, environmental information such as the non-grass object in the working area is collected through a sensor disposed on the body 1. In a preferred embodiment of the present disclosure, the sensor is a vision sensor, such as a 3D-ToF, a binocular vision, a monocular vision sensor, etc., to obtain a real-time image of the working area during a working process of the autonomous robot. Of course, the sensor in this embodiment can also be an ultrasonic sensor, an infrared sensor, a torque identification sensor, etc., which is a sensor component used to identify and detect an object in the working area or an operating state of the autonomous robot.

The processor 2 is connected to the sensor to receive a real-time image and/or other sensing information collected by the sensor, and then identify a non-grass object in a working area based on the real-time image and/or other sensing information, and record a position where the non-grass object is located in a map. That is, in the present disclosure, when the autonomous robot encounters the non-grass object during a random operation and confirms that the autonomous robot cannot continue to operate in a current direction, the processor 2 controls the autonomous robot to execute a turning strategy, records a turning position when turning in the map, and records the position where the non-grass object is located.

As an alternative embodiment, the processor 2 can control the autonomous robot to turn every time the autonomous robot encounters a non-grass object and mark a position of the non-grass object. Furthermore, when recording the turning position, the processor 2 can also mark a movement path from a previous turning position to a current turning position, so as to at least obtain an operating trajectory of the autonomous robot in the working area.

It is worth noting that when the autonomous robot is trapped in an extremely narrow area, multiple turnings may occur in an extremely short time. Recording all positions would result in an enormous computational load and an inaccuracy. In this case, only one turning position can be recorded, for example, a first turning position in time, and remaining turning positions are deleted as a noise. Whether the autonomous robot is in the extremely narrow area can be determined based on an obstacle detected by a vision sensor in a front, a left, and a right direction.

In one embodiment of the present disclosure, based on collected environmental information, the processor 2 can also draw a real-time map during a random operation process of the autonomous robot in a working area. Furthermore, the processor 2 can record a turning position when the autonomous robot turns and a movement path between various turning positions.

It should be noted that in the present disclosure, while recording a turning position, a time when the autonomous robot turns can also be recorded, or a sequence of a plurality of turning positions when multiple turnings occur. That is, a position in the present disclosure can comprise three types of an attribute information: a position attribute, a time attribute, or a sequence attribute. Furthermore, an above movement path can refer to a movement path between two turning positions that are adjacent in a time or a sequence.

In a preferred embodiment of the present disclosure, when it is detected that the autonomous robot performs multiple turnings within a limited time or area, it can be determined that the autonomous robot is in a predicament.

In one embodiment, the processor can determine whether the autonomous robot is in a predicament based on a detected distribution of a plurality of turning positions. When a distribution density is greater than a preset threshold, it is determined that the autonomous robot is in the predicament; otherwise, it means the autonomous robot is moving normally in a working area.

In one embodiment, at least one of a following technical means can be used to determine that a distribution density is greater than a preset threshold, i.e., the autonomous robot is in a predicament: the processor detects that an area of a region formed by N consecutive turning positions is smaller than a first preset threshold, or an area of a region formed by N consecutive turning positions has a sudden change and is smaller than an area of a region formed by other N consecutive turning positions, or distances between N consecutive turning positions are smaller than a second preset threshold; wherein N is greater than or equal to 3. The first preset threshold and the second preset threshold are both positively correlated with an area and a length of a working area, and the other N consecutive turning positions differ from the N consecutive turning positions by at least one turning position. The region formed by N turning positions can be a closed region obtained by interconnecting positionally adjacent points among a plurality of turning positions.

For example, the autonomous robot continuously records a turning position when a turning occurs during a movement; starting from a current position, N turning positions are sequentially traced back in an order, and an area of a region formed by N consecutive turning positions is continuously calculated. When an area is found to be smaller than a first preset threshold, such as 10 square meters, it is determined that the autonomous robot is in a predicament. For example, when an area of a region determined by N consecutively recorded turning positions is found to be smaller than a mean of areas of regions formed by other N consecutive turning positions, or smaller than (the mean/N), i.e., when the area suddenly drops significantly, it is determined that the autonomous robot is in a predicament. For example, distances between adjacent turning positions are continuously recorded, and when a distance suddenly drops significantly, it is determined that the autonomous robot is in a predicament.

Furthermore, when determining that the autonomous robot is trapped, the processor 2 can also control the autonomous robot to move in a direction away from an area formed by a plurality of turning positions to escape, by planning an obstacle-free navigation path for the autonomous robot to drive away from a predicament area, and controlling the autonomous robot to drive out of the predicament area along the obstacle-free navigation path.

In the present disclosure, planning an obstacle-free navigation path comprises: generating an escape path based on a current position of the autonomous robot and a target turning position previous to a plurality of turning positions; and controlling the autonomous robot to move along the escape path to escape from a predicament. That is, when the autonomous robot is trapped, the autonomous robot is controlled to find a target turning position located outside the predicament to escape.

Specifically, planning methods are explained through three following embodiments. These three embodiments can be performed simultaneously in pairs or all three can be performed simultaneously in a same autonomous robot. When one embodiment still fails to escape, another embodiment is adopted.

In one embodiment, when reaching a current position, in response to detecting that an area of a region formed by N consecutive turning positions is smaller than an area of a region formed by other N consecutive turning positions, one turning position recorded in a detected region with a larger area is obtained as a target turning position; and an escape path is generated based on the current position and the target turning position. The at least one turning position is a point that is earlier in a time or a sequence among the N turning positions, generally one of a first (N/2) points, or a second earliest turning position in a chronological order, or a first earliest turning position in a chronological order, that is, a turning position recorded first is used as the target turning position. For example, when the autonomous robot discovers that the autonomous robot is in a predicament during a movement, the autonomous robot obtains a first area of a region determined by N turning positions continuously recorded in a time or a sequence up to the current position; and obtains other N turning positions excluding a most recent turning relative to the current position in the time, and obtains a second area of a region determined by the other N turning positions. If the second area is greater than the first area, an earliest turning position in the time in a region corresponding to the second area is used as the target turning position. Alternatively, other N turning positions can be obtained excluding two most recent turnings relative to the current position in the time, and a third area of a region determined by these N turning positions is obtained. If the third area is greater than the first area, an earliest turning position in the time in a region corresponding to the third area is used as the target turning position; or a second earliest turning position in the time in the region corresponding to the third area can be used as the target turning position. Through an above method, a target turning position located outside a predicament is found.

In another embodiment, when reaching a current position, in response to detecting that an area of a region formed by N consecutive turning positions is greater than a third preset threshold, a turning position recorded first in a detected region is obtained as a target turning position; and an escape path is generated based on the current position and the target turning position. For example, when the autonomous robot discovers that the autonomous robot is in a predicament during a movement, N turning positions are obtained excluding a most recent turning relative to the current position in a time, and a fourth area of a region determined by these N turning positions is obtained. If the fourth area is greater than a third preset threshold, an earliest turning position in the time in a region corresponding to the third area is used as the target turning position. Alternatively, N turning positions can be obtained excluding two most recent turnings relative to the current position in the time, and a fifth area of a region determined by these N turning positions is obtained. If the fifth area is greater than the third preset threshold, an earliest or a second earliest turning position in the time in a region corresponding to the fifth area is used as the target turning position. Through an above method, a target turning position located outside a predicament is found.

In another embodiment, when the autonomous robot reaches a current position, the autonomous robot is controlled to execute at least one area determination step until an area of a region is greater than a fourth preset threshold; wherein a step of determining an area of a region comprises: obtaining N consecutive turning positions when reaching the current position; and determining an area of a region formed by the N consecutive turning positions; wherein if the area of the region is smaller than a fourth preset threshold, one turning position is added and the area determination step continues to be executed; wherein N is greater than or equal to 3; and generating an escape path based on the current position and a target turning position added when the area is greater than the fourth preset threshold. Through an above method, a target turning position located outside a predicament is found.

Specifically, when the processor 2 identifies that at a time T, an area of a polygon formed by N turning position markers is smaller than an area threshold, for example, the area threshold is 1.5 square meters, the processor 2 determines that the autonomous robot is trapped in a current area. The time T and N correspond one-to-one in the time. At this time, the processor 2 marks a position mark at the time T as a backtracking starting point. The processor 2 backtracks information according to each obtained turning position. Specifically, the processor 2 backtracks forward in a reverse chronological order from the time T, that is, sequentially obtains a turning position at the time T, a time T-1, a time T-2, a time T-3, ..., and further obtains an area of a region enclosed by a plurality of turning positions at the time T-1, the time T-2, the time T-3, ... respectively. Furthermore, when backtracking to a time T-X, and an area of a region enclosed by a plurality of turning positions corresponding to the time T-X satisfies an area threshold, for example, the area threshold is 4 square meters, a turning position marker corresponding to the time T-X is obtained as a backtracking endpoint, that is, the backtracking endpoint is located outside a predicament area, which means that when the autonomous robot moves to the backtracking endpoint, the autonomous robot can be guaranteed to escape.

After determining a target turning position using at least one of an above methods, the autonomous robot can be controlled to obtain a connected path in a movement path that passes through a current position and the target turning position, and use the connected path as an escape path. The connected path can be a shortest path in the movement path that passes through the current position and the target turning position. By controlling the autonomous robot to move along the connected path, rather than returning along a movement path that led to being trapped, a faster escape is achieved.

In this embodiment, the connected path can also comprise: obtaining a movement path between two turning positions at an adjacent time in the movement path, and obtaining an intersection point between various movement paths; and segmenting the movement path based on the intersection point to obtain a plurality of path segments; wherein a shortest path is a combination of a plurality of path segments from the current position to the target turning position.

After obtaining an escape path through at least one of an above methods, the autonomous robot is controlled to move along the escape path. During a movement, if no obstacle is identified through sensor data collected in real time data within a preset time period, for example, no obstacle is identified in an image collected by an image sensor within 1 minute, it indicates a successful escape.

After the autonomous robot successfully escapes through at least one of an above methods, in response to a successful escape, the autonomous robot is controlled to enter a random mode; in the random mode, the autonomous robot randomly moves in a direction within a working area defined by a boundary until an obstacle is identified again. Through this method, the autonomous robot can quickly enter a normal operation.

As an alternative embodiment, in response to a successful escape, the autonomous robot can be controlled to change a movement direction of the autonomous robot, and a changed movement direction is different from an orientation between the autonomous robot and a predicament area, thereby preventing the autonomous robot from re-entering the predicament area in a short time. The autonomous robot is controlled to enter a random mode after changing a movement method.

As an alternative embodiment, in response to the autonomous robot successfully escaping, a region containing a plurality of turning positions is set as a restricted area on a map; when detecting that the autonomous robot reaches the restricted area, the autonomous robot is controlled to turn or move along a boundary of the restricted area. This method prevents the autonomous robot from repeatedly entering a predicament area and being trapped repeatedly. For example, a region formed by enclosing a plurality of turning positions can be expanded outward by a distance to obtain an expanded region, and a region corresponding to the expanded region in a local map is marked as a restricted area. When the autonomous robot successfully escapes and moves randomly, and the autonomous robot is detected to reach the restricted area, the autonomous robot is controlled to turn or move along the boundary of the restricted area. When adopting this restricted area setting method, an embodiment of entering a random mode or changing a movement method can also be executed simultaneously, which is not limited by the present application.

After the autonomous robot fails to escape through at least one of an above methods, the autonomous robot is controlled to move along a boundary of an obstacle, searching for an exit that can enable an escape during a movement. The autonomous robot can search for an exit through at least one of a following embodiments. When one embodiment still fails to escape, another embodiment is adopted.

In one embodiment, during a movement process, the autonomous robot identifies an obstacle-free area through collected sensor data, and controls the autonomous robot to travel to the obstacle-free area to enable the autonomous robot to escape; wherein the obstacle-free area is a spatial region where a distance between obstacles is not smaller than a body width of the autonomous robot. When the autonomous robot identifies the obstacle-free area, the autonomous robot is controlled to travel to the obstacle-free area and drive out, thereby successfully escaping.

In another embodiment, when the autonomous robot identifies through collected sensor data during a movement that the autonomous robot has moved to a vicinity of a target turning position or moved to a vicinity of a region determined by a plurality of turning positions and the target turning position, it is determined that the autonomous robot successfully escapes.

In another embodiment, when it is detected that a non-grass object exists on a front side and a left and a right side of an operating direction of the autonomous robot, or a turning position recorded by the processor 2 is almost located on a same straight line, a movement path to a current position can be obtained, and the autonomous robot is controlled to move backward along the movement path to drive out of a current area. When it is identified that the autonomous robot is in this scenario, the autonomous robot may be trapped in a dead end or a turning of the autonomous robot is obstructed, and thus an escape fails using another path strategy. At this time, a movement path before reaching the current position can be obtained, and the autonomous robot is controlled to move backward along the movement path to drive out of the current area.

The processor 2 determines through environmental information collected by a sensor that during a process of the autonomous robot moving to a current position, a non-grass object exists on both sides of a path, and a spacing between the non-grass object is smaller than a turning spacing required when the autonomous robot executes a turning strategy. When the processor 2 confirms that the autonomous robot is trapped in a dead end, the processor 2 can backtrack a movement path before the autonomous robot moved to the current position, and control the autonomous robot to move backward along a backtracked movement path to drive out of a predicament. Furthermore, to ensure a timeliness of a backward movement of the autonomous robot out of a current area, the sensor will identify a non-grass object on both sides of the movement path in real time during a backward movement process of the autonomous robot. When a gap on either side of an operating path is identified that allows the autonomous robot to enter and escape from the predicament, the autonomous robot is controlled to turn toward the gap and pass through an opening. While escaping from the current area, the autonomous robot enters another location in a working area to continue a mowing work.

In an embodiment of the present disclosure, determining that an autonomous robot encounters an obstacle based on environmental information; in response to the autonomous robot encountering the obstacle, controlling the autonomous robot to turn; recording a turning position of the autonomous robot in a map when the autonomous robot is turning; and in response to detecting that the autonomous robot performs multiple turnings within a limited time or area, controlling the autonomous robot to move in a direction away from an area formed by a plurality of turning positions to escape. Using a turning position of the autonomous robot to find an escape direction, rather than a random collision or a direct return along an original path, improves a working efficiency of the autonomous robot. The present disclosure can help the autonomous robot smoothly escape from a trapped area, and then facilitate completion of a mowing work in a remaining area by the autonomous robot, effectively improving the working efficiency of the autonomous robot, and enhancing a user-friendliness of the autonomous robot.

The embodiments in the present disclosure will be explained below through a specific application scenario.

As shown in FIG. 6, during a process of an autonomous robot moving in an open area A, the autonomous robot moves from a turning position O to a turning position Q, from the turning position Q to a turning position P1 in a narrow area B, and then sequentially passes through multiple turnings at a plurality of turning positions P2-P5 to reach an illustrated current position M. During a movement, a turning position is recorded, and a movement path between various turning positions is recorded. An area of a region formed by 5 consecutive turning positions P5-P1 is calculated as A1 and an area of a region formed by Q, P4-P1 is calculated as A2. It is detected that A1 is smaller than (A2/5), and it is determined that the autonomous robot is in a predicament. The turning position Q recorded first in A2 with a larger area is obtained as a target turning position. Based on a recorded movement path between various turning positions and a movement path to the current position, a shortest path passing through the current position and the target turning position is determined. A movement path MR and a movement path RQ indicated by illustrated arrows are used as an escape path, and the autonomous robot is controlled to move along the escape path. When the autonomous robot moves along the escape path and no obstacle is identified by a vision sensor for a period of time, an escape is successful. In response to the autonomous robot successfully escaping, the autonomous robot is controlled to enter a random mode, that is, randomly turn and move straight until a non-working object is identified again.

The present disclosure also provides an autonomous robot. The autonomous robot is similarly used for automatically walking and working within a working area. In this embodiment, the autonomous robot has a same structure as an aforementioned autonomous robot, with an only difference being that a processor 2 accommodated in a body 1 uses a different control method for controlling an operation of the autonomous robot. Therefore, a following specification will only describe differences between the two, and same and similar parts will not be elaborated again in the following specification.

Please refer to FIG. 4. In this embodiment, a processor 2 is used to execute a control method for controlling an autonomous robot to escape from a trapped area. The control method specifically comprises:
executing a turning strategy based on an identified non-grass object; and
in response to the autonomous robot satisfying an escape condition when executing the turning strategy, executing an escape strategy;
wherein the escape strategy comprises:
   obtaining a movement path of the autonomous robot traveling to a current position;
   controlling the autonomous robot to move backward along the movement path, and obtaining environmental information around the autonomous robot in real time; and
   based on the environmental information, determining whether a passable path that allows turning and passing through exists, so that the autonomous robot, also called an autonomous moving robot, escapes from a current area.

Specifically, when a sensor identifies a non-grass object in a working area, an information about the non-grass object is transmitted to a processor for processing. When the processor determines the information about the non-grass object, the processor controls an autonomous robot to execute a turning strategy to escape from a position where the non-grass object is located.

Furthermore, the processor will further monitor and identify an operating device of the autonomous robot in real time. When the processor identifies that the autonomous robot satisfies an escape condition when executing a turning strategy, the processor controls the autonomous robot to execute an escape strategy.

When the processor confirms that a non-grass object exists in front of an operating direction of an autonomous robot, the processor can mark a turning position when executing a turning strategy based on an identified non-grass object; and after marking, obtain a movement path between two turning positions at an adjacent time, thereby facilitating a planning of an escape path by the processor according to the movement path.

At this time, an escape strategy executed by the processor comprises:
obtaining a turning position temporally adjacent to a current position;
obtaining a movement path of an autonomous robot traveling from the turning position to the current position; and
controlling the autonomous robot to move backward along the movement path to the turning position, and adjusting a pose of the autonomous robot at the turning position, so that the autonomous robot avoids a turning trapped position and continues to operate.

The current position is a turning position when a processor controls an autonomous robot to execute a turning strategy and satisfy a trapped condition in a current timing sequence.

Furthermore, adjusting a pose of an autonomous robot comprises at least adjusting a turning angle and a turning direction of the autonomous robot. In fact, when the autonomous robot executes a turning strategy, the turning angle may be predicted. Therefore, to avoid the autonomous robot re-entering a current area when continuing to execute the turning strategy from a turning position temporally adjacent when exiting the current area, a processor will perform a pose adjustment when retreating to the turning position temporally adjacent to a current position, and then execute a turning with an adjusted pose, thereby avoiding an aforementioned situation.

In this embodiment, an escape condition that a processor uses to control an autonomous robot to execute an escape strategy comprises at least that the autonomous robot is turning trapped when executing a turning strategy or that the autonomous robot consecutively executes the turning strategy multiple times in a current area.

Specifically, the autonomous robot being turning trapped when executing a turning strategy means that a processor determines through environmental information collected by a sensor that a non-grass object exists on both sides of a current position of the autonomous robot and an operating path moving to the current position, and a spacing between the non-grass object is smaller than a turning spacing when the autonomous robot executes the turning strategy.

When a processor confirms that an autonomous robot operates to a current position and is turning trapped, the processor can further identify a turning position corresponding to an adjacent time before a current time, and obtain a movement path between the current position and the turning position at the adjacent time, so as to control the autonomous robot to move backward along the movement path to drive out of the current area.

It should be noted that "a turning position temporally adjacent to a current position" mentioned in an embodiment of the present disclosure specifically refers to a turning position from which an autonomous robot can move backward along a movement path to drive out of a current area. In fact, when the autonomous robot operates to the current position, the autonomous robot may pass through a plurality of turning positions, and the plurality of turning positions are temporally adjacent. That is, a processor controls a sensor to collect environmental information in real time during an execution of an escape strategy. Specifically, at a timing sequence T, the autonomous robot operates to a current position that satisfies an escape condition. Furthermore, the processor controls the autonomous robot to backtrack to a turning position at a time T-1 and a movement path from the turning position at the time T-1 to the current position at a time T. If the sensor at the turning position at the time T-1 identifies that a non-grass object still exists on both sides of the autonomous robot, and a spacing between the non-grass object is smaller than a turning spacing when the autonomous robot executes a turning strategy, the processor continues to backtrack to a turning position at a time T-2, and obtains a movement path when the autonomous robot moves from the turning position at the time T-2 to the turning position at the time T-1, so as to continue controlling the autonomous robot to move backward along the movement path, until the processor identifies that at least one side during a backward movement presents a gap or a path that enables the autonomous robot to turn and escape from the current area, thereby facilitating an escape of the autonomous robot from the current area.

Furthermore, when an escape condition in this embodiment is "an autonomous robot consecutively executes a turning strategy multiple times in a current area", a determination of whether the autonomous robot is trapped can be made through an area of a polygon formed by a connection between turning positions when the autonomous robot executes the turning strategy multiple times in the current area, or a movement distance between the turning positions and a time interval between the turning positions, etc.

Taking an escape condition being an area condition as an example, when an autonomous robot operates in a current area, affected by a non-grass object at an edge of the current area, the autonomous robot consecutively executes a turning strategy multiple times in the current area, and then obtains N turning positions at an adjacent timing sequence. Furthermore, the obtained N turning positions are connected to obtain a polygon and calculate an area of the polygon, and then the area of the polygon is compared with the area condition. If the area of the polygon satisfies the area condition, such as when the area condition is 1.5 square meters and the area of the polygon is smaller than 1.5 square meters, it is determined that the autonomous robot satisfies the escape condition, and the autonomous robot is controlled to execute an escape strategy.

In summary, an autonomous robot provided by another embodiment of the present disclosure, by executing a control method provided by the present disclosure, can control the autonomous robot to use a historical trajectory in combinaiton with a collection of environmental information, enabling the autonomous robot to quickly exit a current area along a movement path, and turn to drive away from the current area after escaping from the area, avoiding re-entering a trapped area by mistake, further improving an efficiency of the autonomous robot to escape.

In one embodiment, an above control method is applied to a random mode of an autonomous moving device, where in some embodiments of the present application, the autonomous moving device may also be called an autonomous robot. When the autonomous moving device enters a random mode, an escape control step corresponding to the random mode can be adopted for an escape. The random mode refers to the autonomous moving device moving and/or working within a working area defined by a boundary, which can be a planned cutting or a random work. Similarly, if the autonomous moving device enters an obstructed trapped condition or a slipping condition during an execution of an escape step in the random mode, the obstructed trapped condition or the slipping condition can be prioritized, and an escape continues after the obstructed trapped condition or the slipping condition ends.

In a random mode, if an autonomous moving device still cannot escape after executing an escape control step corresponding to the random mode, the autonomous moving device can invoke an escape control step based on a single frame image. The autonomous moving device can perform an image recognition processing on a single frame of a real-time image to obtain a grass area and a non-grass area in the image, where in some embodiments of the present application, the non-grass area may also be called a non-grass object. Based on a position relationship between the grass area and the non-grass area, a grass area located between the non-grass area with an appropriate width is determined, and the grass area is used as a first opening. Based on a relative position relationship between the first opening and the autonomous moving device, the autonomous moving device is controlled to move toward the first opening, and then pass through the first opening, thereby driving away from a predicament area.

When encountering a slipping condition in a random mode, because a positioning accuracy of an autonomous moving device is low during a slipping, an accuracy of a real-time local map is greatly reduced. At this time, the real-time local map of the autonomous moving device can be cleared, and after the slipping condition ends, an establishment of a local map is restarted, and an escape step corresponding to an internal cutting mode is re-executed.

In one embodiment, in an edge-following mode of an autonomous moving device, an escape control step corresponding to the edge-following mode can be adopted for an escape. The edge-following mode refers to the autonomous moving device moving and/or working along a boundary of a working area. That is, in the edge-following mode, if it is determined based on sensing information that the autonomous moving device satisfies a predicament condition, an above escape step can be executed. If a machine enters an obstructed trapped condition or a slipping condition during an execution of the escape step, the obstructed trapped condition or the slipping condition can be prioritized, and an escape step corresponding to the edge-following mode continues after the obstructed trapped condition or the slipping condition ends.

When encountering a slipping condition in an edge-following mode, because a positioning accuracy of an autonomous moving device is low during a slipping, an accuracy of a real-time local map is greatly reduced. At this time, the real-time local map of the autonomous moving device can be cleared, and after the slipping condition ends, an establishment of a local map is restarted, and an escape step in the edge-following mode is re-executed.

Furthermore, in one embodiment, during an escape process of an autonomous robot in above different scenarios, a position relationship between the autonomous robot and a boundary is detected in real time. Based on a detected position relationship of being inside or outside a working area, the autonomous robot is controlled to execute a corresponding strategy. Specifically, when it is identified that the autonomous robot is inside the working area, it is simulated whether the autonomous robot continuing to move from a current position in a current orientation will go out of a bound. If the autonomous robot will not drive out of the bound, the autonomous robot is controlled to continue moving in that direction; if the autonomous robot will drive out of the bound, the autonomous robot is controlled to rotate in place and/or move backward and repeat, to prevent the autonomous robot from driving out of the bound. When it is identified that the autonomous robot is outside the working area, which may be due to the autonomous robot deviating from an original trajectory due to a collision and other reasons, it is simulated whether the autonomous robot continuing to move from the current position in the current orientation can return to the working area. If the autonomous robot can, the autonomous robot is controlled to move in that direction; if moving in that direction cannot return to the working area and will instead cause a distance from the bound to increase, the autonomous robot is controlled to rotate in place and/or move backward and repeat, to find a suitable direction and control the autonomous robot to move in that direction, thereby returning to an interior of the working area.

An escape step corresponding to an edge-following mode is described below. To facilitate an understanding of a technical solution provided by an embodiment of the present disclosure by a person skilled in the art, a technical environment for implementing the technical solution is first described below.

The embodiment provides an autonomous moving device, a control method, and a computer-readable storage medium. The autonomous moving device can be an intelligent device capable of an automatic movement such as an automatic lawn mower, an automatic vacuum cleaner, an automatic mop, or an automatic snow plow, which can automatically move and perform a corresponding work within a designated working area, and can also return to a docking station along a boundary corresponding to the working area for a docking or a charging.

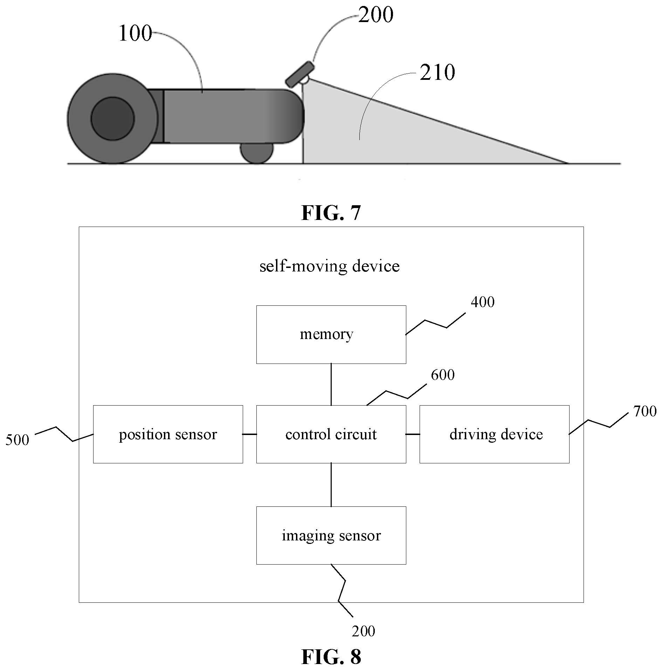

This embodiment provides an autonomous moving device. As shown in FIGS. 7 and 8, the autonomous moving device comprises a body 100, an imaging sensor 200, a position sensor 300, and a control circuit 600.

Specifically, the body 100 comprises a driving device 700. The driving device 700 is used to drive the body 100 to move on a working surface according to a received driving instruction, and usually comprises a wheel and a motor that drives the wheel to rotate. The wheel can comprise a driving wheel and a driven wheel. The wheel can be distributed on both sides of the body 100, and a number of wheels on each side can be one or two, etc.

The body 100 also comprises a working module, which is used to execute a specific working task. For example, if an autonomous moving device is an automatic lawn mower, the working module comprises a mowing blade, a cutting motor, etc., and can also comprise an auxiliary component such as a mowing height adjustment mechanism that optimizes or adjusts a mowing effect; for example, if the autonomous moving device is an automatic vacuum cleaner, the working module comprises a working component for executing a vacuuming task such as a vacuum motor, a vacuum port, a vacuum tube, a vacuum chamber, and a dust collection device.

The body 100 may also comprise an energy module, which is used to provide energy for various operations of an autonomous moving device. The energy module may comprise a rechargeable battery and a charging connection structure, wherein the charging connection structure is usually a charging electrode plate that can be used in conjunction with a charging electrode plate provided at a docking station to charge the autonomous moving device.

The body 100 also comprises a memory 400, which is used to store data generated by a sensor or a control circuit, or to pre-store data for a use by the control circuit.

The body 100 also comprises a position sensor 500, which may comprise an inertial sensor IMU or an odometer ODO installed on a driving device 700, etc., used to obtain a relative position based on a movement condition of the body 100.

In addition to above modules, the body 100 may also comprise a housing for accommodating and installing various modules, a control panel for a user operation, etc., and may also comprise various environmental sensors, such as a humidity sensor, a temperature sensor, an acceleration sensor, a light sensor, etc. The above sensors can assist an autonomous moving device in judging a working environment to execute a corresponding program.

The control circuit 600 is a core component of an autonomous moving device, used to control the autonomous moving device to move and work automatically. A function executed by the control circuit 600 comprises controlling a working module to start a work or stop, generating a movement path and controlling a driving device 700 to move according to the path, judging a power level of an energy module and timely controlling the autonomous moving device to return to a docking station for an automatic docking and a charging, executing a corresponding program in combination with data from an environmental sensor, etc.

Referring to FIGS. 7 and 8, an autonomous moving device comprises an imaging sensor 200. The imaging sensor 200 is connected to a body 100 and is used to collect an image in a forward direction of the body 100. The image is at least partially an image of a working surface in the forward direction. A collected image is located within a field of view range 210 of the imaging sensor 200. The imaging sensor 200 may be a commonly used camera or a laser radar in an industry.

Generally, an imaging sensor 200 is installed at an upper position of a front part of a body 100, preferably centered, with a viewing angle directed toward a front and downward to collect an image of a working surface. A size of a field of view range 210 can be adjusted according to an actual requirement. A larger the field of view range 210, a more image collected in a forward direction of the body 100, and vice versa. The forward direction of the body 100 can have a plurality of forms, such as a normal forward movement, a backward movement, a turning, etc. In this embodiment, a forward direction of the body refers to a direction of a normal forward movement, i.e., a direction of a central axis of the body.

To solve a technical problem of how to improve a working efficiency, this embodiment provides a control method applied to an autonomous moving device. The autonomous moving device is configured to move and/or work in a working area. The autonomous moving device is provided with a camera, which can be located on a front side of a body and can photograph the working area. A number of cameras may be one camera or a plurality of cameras.

When an autonomous moving device faces a complex environment, the autonomous moving device may be trapped by a predicament area, resulting in an inability to move outside the predicament area and an inability to work in another place, leading to a low working efficiency.

In one embodiment, only one camera is provided, that is, an autonomous moving device is configured with a monocular camera, but an information obtained by the monocular camera is relatively limited, so an autonomous moving device configured with a monocular camera is more difficult to escape.

In one embodiment, a control method is provided, applied to an autonomous moving device. The autonomous moving device is configured to move and/or work in a working area. The autonomous moving device is provided with a sensing module. The control method comprises:
a step S1: controlling the autonomous moving device to move in the working area;
a step S2: obtaining a sensing information based on the sensing module; and
a step S3: when determining that the autonomous moving device satisfies a predicament condition based on the sensing information, executing an escape step to control the autonomous moving device to drive away from a predicament area; wherein the predicament area is an area that limits a movement range of the autonomous moving device, the predicament area has at least one predicament object, and the at least one predicament object comprises a predicament obstacle and/or a predicament boundary.

After a user starts an autonomous moving device, the autonomous moving device can automatically move and/or work inside a working area, and can also move and/or work along a boundary of the working area. During a movement and/or a work process, the autonomous moving device can collect a sensing information based on a sensing module, analyze a surrounding environment based on the sensing information, generate a control instruction, and the control instruction can indicate a movement direction, a movement speed, a turning angle, etc.

A predicament area can limit a movement range of an autonomous moving device, making it difficult for the autonomous moving device to escape from the area. The predicament area can comprise a predicament obstacle and/or a predicament boundary. The predicament obstacle may comprise a static obstacle, such as an island/a tree, a dynamic obstacle, such as a movable person/an animal, and a temporary obstacle temporarily set by a user. The predicament boundary can be a part of a working area boundary.

An autonomous moving device moving to a predicament area can represent a state of the autonomous moving device. The predicament area may not be embodied in a program, but the autonomous moving device determines whether the autonomous moving device is in a state of moving to a predicament area by comparing some parameters/conditions. For example, when a path search is impossible, where no passable path can be planned, or an area is too narrow and a device fails to leave within a preset time, or a distance to a surrounding obstacle is close, etc.; when a certain condition is met, a state of the autonomous moving device is determined to be in a predicament area.

For example, whether an autonomous moving device has moved to a predicament area can be determined based on a sensing information. If the autonomous moving device satisfies a predicament condition, it means the autonomous moving device has moved to a predicament area, and an escape step needs to be executed to escape from the predicament area. If the autonomous moving device does not satisfy a predicament condition, it means the autonomous moving device is moving and/working normally and has not moved to a predicament area.

In one embodiment, a sensing module comprises at least one of a following: a camera, an inertial navigator, a collision sensor, a torque sensor, a GPS, an RTK, a magnetic sensor, or a radar sensor. The inertial navigator can comprise an IMU and an ODO.

In one embodiment, a movement information of an autonomous moving device can be analyzed based on a sensing information. The movement information comprises at least one of the following information: a movement direction, a turning angle, a movement trajectory, a movement duration, a movement speed, an image during a movement, a relative position relationship between a non-grass object and the autonomous movingautonomous device during the movement. The non-grass object is any object that is not a grass, such as a boundary, a tree, a stone, an animal, etc. Whether the autonomous moving device satisfies a predicament condition can be determined based on the movement information.

In one embodiment, a predicament condition comprises:
an autonomous moving device maintains a target position relationship with a non-grass object, a target angle is greater than a first threshold, and a spatial parameter corresponding to a target trajectory is smaller than a second threshold;
or, the autonomous moving device maintains a target position relationship with a non-grass object, a target angle is greater than a first threshold, and a target duration is smaller than a third threshold;
wherein the target position relationship is that the non-grass object is located on a first side of the autonomous moving device, the target angle is a cumulative turning angle of the autonomous moving device during a process of maintaining the target position relationship, the target trajectory is a movement trajectory of the autonomous moving device during the process of maintaining the target position relationship, and the target duration is a duration of maintaining the target position relationship.

For example, if a default edge-following method of an autonomous moving device is to keep a boundary on a right side of the autonomous moving device, a first side can be set as the right side of the autonomous moving device. If the default edge-following method of the autonomous moving device is to keep a boundary on a left side of the autonomous moving device, the first side can be set as the left side of the autonomous moving device.

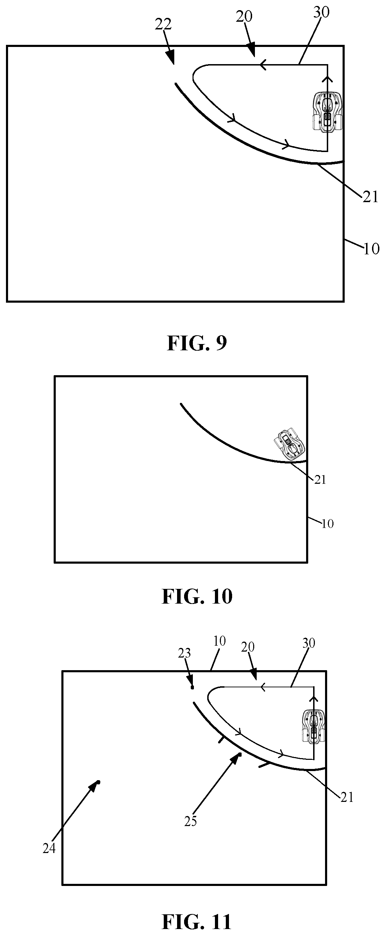

As shown in FIG. 9, a predicament area 20 can be an area enclosed by a part of a boundary 10 and an obstacle 21. An opening 22 of the predicament area is relatively small, and an autonomous moving device may inadvertently enter the predicament area 20 through the opening 22. The autonomous moving device will detect a boundary and an obstacle in the predicament area, thereby taking a certain avoidance measure. For example, a circumventing method will be adopted to try to circumvent the boundary and the obstacle. During this process, the autonomous moving device can be set to be located on a left side of the boundary and the obstacle, keeping the boundary and the obstacle on a right side of the autonomous moving device. An implementation method is: determining a position of a boundary or an obstacle based on an image, determining a relative position relationship between the autonomous moving device and the boundary/the obstacle, and adjusting a pose of the autonomous moving device so that the boundary/the obstacle is always located on the right side of the autonomous moving device.

As shown in FIG. 9, an autonomous moving device moves in a direction indicated by an arrow in a figure. A first side is a right side, and a target position relationship is that a non-grass object is located on the right side of the autonomous moving device. During a process of maintaining the target position relationship and moving, a target trajectory 30 is formed. During the process of maintaining the target position relationship and moving, the autonomous moving device will determine a cumulative turning angle during this process, i.e., a target angle. If the cumulative turning angle is greater than a first threshold, such as 540 degrees, it means the autonomous moving device is moving in a circle. At a same time, if a spatial parameter corresponding to the target trajectory is smaller than a second threshold, or a target duration is smaller than a third threshold, it means that while the autonomous moving device is moving in a circle, a spatial range the autonomous moving device covers is very small, indicating that the autonomous moving device is trapped/has moved to a predicament area.

As shown in FIG. 9, determination methods for a target trajectory and a target duration are as follows. A spatial parameter corresponding to the target trajectory 30 can represent a size of a space covered by the target trajectory 30. For example, the spatial parameter can be a spatial area, a spatial length, a spatial width, a side length of the space in a certain direction, etc., covered by the target trajectory 30. During a process of maintaining a target position relationship and moving, an autonomous moving device will determine a cumulative duration during this process, i.e., the target duration.

In other embodiments, a predicament area can be an area enclosed only by an obstacle.

In one embodiment, executing an escape step to control an autonomous moving device to drive away from a predicament area comprises:
when the autonomous moving device satisfies a predicament condition and a first preset condition, obtaining a real-time image, and controlling the autonomous moving device to drive away from the predicament area according to the real-time image.

A first preset condition represents that a corresponding predicament area is relatively small. When an autonomous moving device satisfies a predicament condition, it can indicate that the autonomous moving device is trapped in a predicament area. If at the same time, the autonomous moving device also meets the first preset condition, it can indicate that the predicament area where the autonomous moving device is trapped is relatively small. At this time, a real-time image can be obtained based on a camera, and a movement direction of the autonomous moving device can be controlled according to the real-time image, thereby driving away from the predicament area.

In one embodiment, a first preset condition comprises: a maximum side length of a target polygon is smaller than a fourth threshold; wherein the target polygon is a circumscribing polygon of a target trajectory.

For example, a first preset condition comprises: a maximum side length of a circumscribing polygon of a target trajectory 30 is smaller than 1.5 meters.

In one embodiment, obtaining a real-time image and controlling an autonomous moving device to drive away from a predicament area according to the real-time image comprises:
obtaining the real-time image;
determining a first opening according to the real-time image, wherein the first opening corresponds to a grass area between an adjacent predicament object; and
controlling the autonomous moving device to move toward the first opening and pass through the first opening to drive away from the predicament area according to the real-time image.

When a predicament area is relatively small, a real-time image can be captured based on a camera. An autonomous moving device can perform an image recognition processing on a single frame of the real-time image to obtain a grass area and a non-grass area in the image. Based on a position relationship between the grass area and the non-grass area, a grass area located between the non-grass area with an appropriate width is determined, and the grass area is used as a first opening. Based on a relative position relationship between the first opening and the autonomous moving device, the autonomous moving device is controlled to move toward the first opening, and then pass through the first opening, thereby driving away from the predicament area. For example, a width of the first opening must be at least greater than a body width of the autonomous moving device.

A method of using a single frame image to find an opening is more suitable for a case where a predicament area is relatively small, and can accurately, quickly, and efficiently determine the opening, and control an autonomous moving device to escape efficiently.

In one embodiment, determining a first opening according to a real-time image comprises:
converting the real-time image into a raster image, wherein the raster image comprises a grass raster and a non-grass raster, the grass raster represents a grass object, and the non-grass raster represents a non-grass object; and
determining the first opening in the raster image according to a relative position relationship between the grass raster and the non-grass raster.

In one embodiment, controlling an autonomous moving device to move toward a first opening and pass through the first opening comprises:
determining a target direction based on the first opening in a raster image;
controlling the autonomous moving device to move toward the target direction to control the autonomous moving device to move to the first opening; and
controlling the autonomous moving device to advance to pass through the first opening.

For example, a camera is a 2D camera, and a captured real-time image is a two-dimensional image. It is difficult to directly determine an opening based on a two-dimensional image; therefore, an image recognition processing can be performed on the two-dimensional image to determine a grass area and a non-grass area in the image, convert the two-dimensional image into a raster image, preserve a grass attribute or a non-grass attribute corresponding to various position points in the raster image, and obtain a grass raster/a non-grass raster. A first opening is determined according to the raster image. The raster image can more accurately determine a distance information between objects, thereby accurately determining an opening with an appropriate width; the raster image can more accurately determine a relative position information between a non-grass object and an autonomous moving device, thereby more accurately controlling the autonomous moving device to move toward the opening.

In one embodiment, a control method further comprises:
when a movement information satisfies a first preset condition, obtaining a first map, and controlling an autonomous moving device to avoid an obstacle based on the first map.

In a process of determining an opening based on a real-time image and controlling an autonomous moving device to move toward the opening, the autonomous moving device can be controlled to avoid an obstacle based on a first map.

A first map can be a global map of a working area or a local map of the working area. The first map can mark a grass, a boundary, an obstacle, etc.

Obtaining a map based on a plurality of images and performing an obstacle avoidance based on the map; moving toward an opening based on a real-time single frame image; combining two methods, while finding an opening, an efficient obstacle avoidance can be achieved, enabling an autonomous moving device to escape more accurately and efficiently, which is more suitable for a case where a predicament area is relatively small.

In one embodiment, a first map is periodically updated. The first map can be a local map, and the local map can represent an environment within a certain range centered on a machine. The local map can be updated as a position of an autonomous moving device changes. The local map can be obtained based on a plurality of images within a latest period of time. The local map can be updated after an interval of a time, i.e., periodically updated.

In one embodiment, executing an escape step to control an autonomous moving device to drive away from a predicament area comprises: when the autonomous moving device satisfies a third preset condition, controlling the autonomous moving device to move backward and turn, wherein the third preset condition comprises that the autonomous moving device continuously performs multiple turnings in an opposite direction.

As shown in FIG. 10, when an autonomous moving device executes a turning action to a first direction, when an obstacle is detected, a turning action to a second direction is then executed, and when the first direction and the second direction are opposite directions, it can be indicated that the autonomous moving device is trapped in a corner, and the autonomous moving device can be first controlled to move backward, then turn around to leave the trapped corner.

The autonomous moving device may detect the obstacle based on vision, or detect the obstacle based on a collision sensor or a torque sensor.

In one embodiment, executing an escape step to control the autonomous moving device to drive away from a predicament area comprises:
when the autonomous moving device satisfies a predicament condition and does not satisfy a first preset condition, obtaining a second map, and controlling the autonomous moving device to drive away from the predicament area according to the second map;
wherein satisfying the first preset condition represents that the autonomous moving device is located in a first predicament area, and not satisfying the first preset condition represents that the autonomous moving device is located in a second predicament area, a predicament area parameter of the first predicament area is smaller than a predicament area parameter of the second predicament area, and the predicament area parameter represents at least one of an area, a length, and a width of the predicament area.

Not satisfying the first preset condition represents that a corresponding predicament area is relatively large. When the autonomous moving device satisfies the predicament condition, it can be indicated that the autonomous moving device is trapped in the predicament area. When at a same time, the autonomous moving device does not satisfy the first preset condition, it can be indicated that the predicament area where the autonomous moving device is trapped is relatively large. At this time, a movement direction of the autonomous moving device can be controlled based on the second map, so as to drive away from the predicament area.

In one embodiment, the predicament condition comprises: the autonomous moving device performs right-edge following (a non-grass object is located on a right side of the autonomous moving device), a cumulative turning angle when the autonomous moving device maintains the right-edge following is greater than 540 degrees, and a maximum side of a circumscribing polygon of a historical trajectory when the autonomous moving device maintains the right-edge following is smaller than 4 meters and not smaller than 1.5 meters.

In one embodiment, the predicament condition comprises: the autonomous moving device performs right-edge following (the non-grass object is located on the right side of the autonomous moving device), the cumulative turning angle when the autonomous moving device maintains the right-edge following is greater than 540 degrees, and a cumulative duration when the autonomous moving device maintains the right-edge following is smaller than 40 seconds.

In one embodiment, the second map may be a local map, and the local map can represent an environment within a certain range centered on the autonomous moving device, and the local map can mark a grass area and a non-grass area (an obstacle, a boundary). The local map may be periodically updated.

In one embodiment, the second map may be a global map of a working area.

In one embodiment, controlling the autonomous moving device to drive away from the predicament area according to the second map comprises:
determining a second opening according to the second map, wherein the second opening corresponds to a grass area between an adjacent predicament object, and the second opening satisfies a position constraint condition;
and controlling the autonomous moving device to move toward the second opening and pass through the second opening according to the second map, so as to drive away from the predicament area.

In a case where the predicament area is relatively large, a method of determining an opening position according to a map is used, which can control the autonomous moving device to escape from the predicament area more accurately, quickly, and efficiently.

In one embodiment, the position constraint condition comprises: no predicament object (the boundary/the obstacle) exists within a surrounding preset range, the second opening is located in a boundary area between the predicament object and the grass area, and opposite sides are interconnected.

For example, traversal determination is performed on position points in the second map to determine whether the position points satisfy the position constraint condition, and when the position points satisfy the position constraint condition, a corresponding position can be used as the second opening.

A position to be determined can be used as a center point to determine whether an obstacle exists within a certain surrounding range, and no obstacle indicates that a space width near the position can accommodate a body to pass through. Determine whether the position to be determined is located in the boundary area between the predicament object and the grass area; when the position is, it indicates that the position is located near the predicament area, and the position is not located in an open area far from a predicament. Determine whether two sides of the position to be determined are interconnected; when the two sides are, it indicates that there is a passable path passing through the position; when the two sides are not, it indicates that the position may be bordered by the predicament object on three sides.

For example, as shown in FIG. 11, based on the above position constraint condition, a position (such as a position 24) far from the predicament area can be excluded, and a position (such as a position 25) adjacent to the predicament object on three sides can also be excluded, so that a position 23 is eventually and accurately used as the second opening.

Determination is performed based on the position constraint condition, so that an incorrect position can be filtered out and the opening position can be accurately found.

For example, the local map can be a raster map, and traversal determination can be performed on all rasters in the local map to determine whether each raster satisfies the position constraint condition one by one. After a raster to be determined is determined, a following determination can be executed: first, whether there is an obstacle within a range of 25 rasters centered on the raster to be determined; second, whether the raster to be determined is located in the boundary area between the predicament object and a grass; and third, whether a line segment that does not pass through the predicament object exists among all line segments passing through the raster to be determined, wherein a length of the line segment is 16 rasters; wherein a width of each raster represents 5 CM of spatial length.

A parameter in this embodiment, such as a length, a width, a threshold, a duration, or an area, can be set according to an actual condition.

After the traversal determination or a selective determination is performed on positions of the map, if the opening still cannot be found, the autonomous moving device can be controlled to move along the boundary of the predicament area to search for an opening during a movement.

A method of performing the traversal determination or the selective determination on the positions of the map to search for the opening and a method of moving along the boundary of the predicament area to search for the opening can have priorities, and a sequence in the priorities can be set according to an actual condition. Alternatively, only one of the methods can be used.

In one embodiment, a method of moving along the boundary of the predicament area to search for the opening is as follows. Controlling the autonomous moving device to drive away from the predicament area according to the second map comprises:
controlling the autonomous moving device to travel along the predicament object according to the second map;
and when a third opening is detected, controlling the autonomous moving device to move toward the third opening and pass through the third opening, so as to drive away from the predicament area, wherein the third opening corresponds to a grass area between the adjacent predicament object.

A path that is along an edge of the predicament object and extends can be planned according to a distribution position of the predicament object in the second map, and the autonomous moving device is controlled to move along a planned path.

While moving along the edge of the predicament object, the autonomous moving device can collect an image and update the map, and if it is detected based on the map that the edge of the predicament object suddenly disappears or is discontinuous, it indicates that the third opening may be encountered. Then, the autonomous moving device can be controlled to execute a hole-drilling action to turn a forward direction to an extension direction of the third opening.

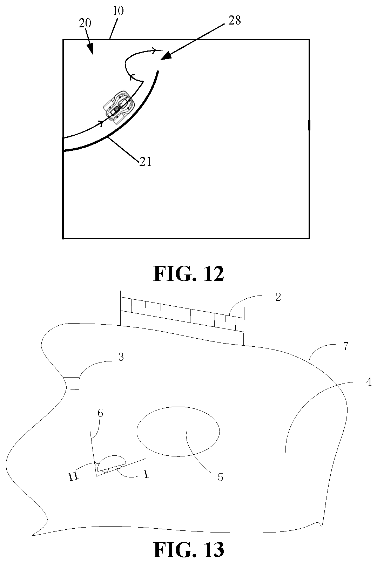

As shown in FIG. 12, taking an example where the predicament object is located on a right side of the autonomous moving device when the autonomous moving device moves along the edge of the predicament object, when it is detected that the edge of the predicament object suddenly disappears or is discontinuous, the autonomous moving device may move in an arc to a left, and then move in an arc to a right, thereby turning the forward direction to a direction where a third opening 28 is located, and continuing to advance to try to pass through the third opening 28.

In one embodiment, controlling the autonomous moving device to drive away from the predicament area according to the second map comprises:
if the autonomous moving device does not successfully pass through the third opening within a preset duration, returning to a step of controlling the autonomous moving device to travel along the predicament object according to the second map.

For example, the preset duration is 6 seconds. Starting from the autonomous moving device moving in the arc to the left, if the autonomous moving device cannot pass through the third opening within 6 seconds, the autonomous moving device moves backward and continues to move along the edge of the predicament object.

In one embodiment, the control method comprises:
when a position of the autonomous moving device is located outside a space corresponding to the target trajectory, determining that the autonomous moving device successfully escapes.

For example, a method of determining whether the autonomous moving device successfully escapes can comprise: determining whether a current position of the autonomous moving device is located outside a circumscribing polygon of the target trajectory; and when the current position is, it indicates a successful escape.

In one embodiment, whether searching for an opening based on a single frame image or searching for an opening based on a local map, the autonomous moving device can be controlled to preferentially turn to a position with few obstacles.

This embodiment can be applied to an edge-following mode or an internal cutting mode of the autonomous moving device, wherein the edge-following mode refers to the autonomous moving device moving and/or cutting along the boundary of the working area, and the internal cutting mode refers to moving and/or cutting within the boundary of the working area.

In addition, an embodiment further provides a control apparatus, applied to an autonomous moving device, wherein the autonomous moving device is configured to move and/or work in a working area, the autonomous moving device is provided with a sensing module, and the control apparatus comprises:
a first control module, configured to control the autonomous moving device to move in the working area;
the sensing module, configured to obtain sensing information;
and a second control module, configured to execute an escape step to control the autonomous moving device to drive away from a predicament area when it is determined that the autonomous moving device satisfies a predicament condition based on the sensing information; wherein the predicament area is an area that limits a movement range of the autonomous moving device, the predicament area has at least one predicament object, and the predicament object comprises a predicament obstacle and/or a predicament boundary.

The first control module and the second control module can be integrated into a controller of the autonomous moving device.

In one embodiment, regardless of being in the edge-following mode or the internal cutting mode, when the autonomous moving device enters an obstructed trapped condition or a slipping condition, the obstructed trapped condition or the slipping condition is prioritized.

An escape step of the autonomous moving device when the autonomous moving device enters the obstructed trapped condition is described below.

As shown in FIG. 13, an automatic working system of the present embodiment can comprise: an autonomous moving device 1, a boundary 7, and a base station 3. Wherein, the autonomous moving device 1 travels and works within a working area 4 defined by the boundary 7, and the base station 3 can be used for the autonomous moving device to return to replenish energy when energy is insufficient. The boundary 7 can be a periphery of the whole working area, called an outer boundary, and usually connected end to end to close the working area 4, and can be electronic or physical. A physical boundary can be only a natural physical boundary formed by a junction between the working area 4 and a non-working area, etc., for example: a natural boundary between grass and non-grass, or a boundary formed by a wall, a fence, a railing, etc. For example, when a lawn of a user is adjacent to a lawn of a neighbor, the boundary can be formed through a fence 2 as shown in FIG. 13. An electronic boundary can be formed by laying a wire around the working area 4 and using a virtual boundary signal, such as an electromagnetic signal, a sound signal, or an optical signal, emitted by a boundary signal generating device connected to the wire. A region 5 not suitable for the autonomous moving device 1 to work can also exist in the working area, and the boundary is formed by the region 5, such as: a flower bed, a pond, an obstacle, etc., which can be called an inner boundary, and a part outside the inner boundary is the working area.

The autonomous moving device 1 can be a device suitable for unattended operation such as an automatic lawn mower, a sweeping robot, or an automatic snow plow, which automatically travel on a surface of the working area to perform a mowing, a vacuuming, or a snow removal work. Of course, the autonomous moving device is not limited to the automatic lawn mower, the sweeping robot, or the automatic snow plow, and can also be another device suitable for unattended operation, which is not limited by the present application.

In a following specific embodiment, taking the automatic working system as an automatic lawn mower system, i.e., the autonomous moving device 1 as an automatic lawn mower, for detailed description.

The automatic lawn mower comprises a housing, a traveling module, a working module, a controller, and an energy module, wherein the controller is connected to and controls the traveling module and the working module, so as to realize automatic travel and work of the automatic lawn mower. In an embodiment of the present application, a vision sensor 11 for collecting an image can also be provided on the automatic lawn mower. After an image is collected, the lawn mower performs image segmentation on a grass, a non-grass, a soil, a fallen leaf, a fence, or a stone plate, etc. therein, and controls the lawn mower to travel in a region corresponding to the grass or another category (such as the stone plate) that the user allows the lawn mower to travel. The lawn mower can adopt a random traveling method to mow the grass inside the working area, and after completing an internal mowing, the lawn mower can also adopt an edge-following traveling method to cut grass on a boundary or return for charging. A position detection sensor (such as an IMU or an ODO) for collecting a current geographical position can also be provided on the automatic lawn mower, and a map of the working area is established through the position detection sensor, so as to control travel and work of the machine according to the map. Of course, solutions in following embodiments of the present application are also applicable to a case where no vision sensor exists on the automatic lawn mower, and only an RTK or another position detection sensor is provided on the lawn mower to establish the map of the working area through the position detection sensor.

In a scenario shown in FIG. 13, when the automatic lawn mower travels in the working area and travels to a region 6 that is formed by two obstacles and is roughly in a shape of an inner right angle, because an obstacle-free area cannot be accurately identified, the automatic lawn mower collides with the inner right angle region 6 multiple times but cannot escape from the predicament. Alternatively, when the automatic lawn mower travels in the working area, because the boundary cannot be accurately identified, the automatic lawn mower collides with the boundary intermittently, and when the boundary is an obstacle such as a wall, a certain degree of damage to the machine may be caused, but the machine cannot escape from the predicament. Alternatively, when the automatic lawn mower travels to a narrow area (such as an area trapped by a table leg), because an exit that can be driven out cannot be accurately identified, a collision with the obstacle (such as the table leg) may occur during a process of finding the exit in the narrow area, but the machine cannot escape from the predicament. These predicaments above may cause the certain degree of damage to the machine, and a working efficiency is relatively low.

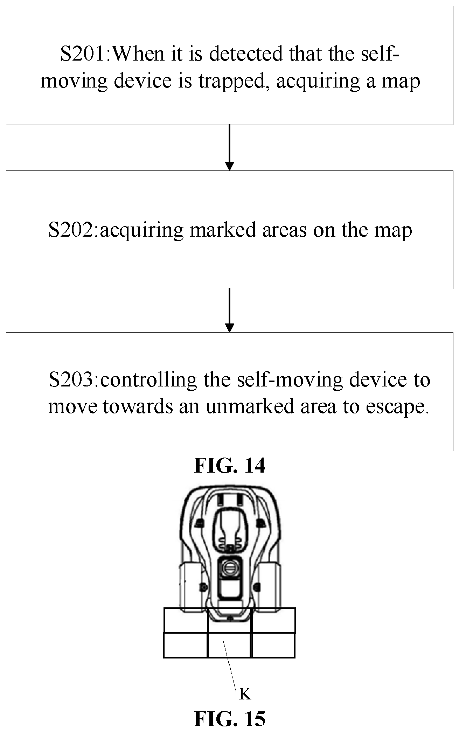

To address the above problems, the present application proposes an automatic working method, wherein when it is detected that the autonomous moving device is trapped, the map and an area on the map that is not marked by an obstacle are obtained; and the autonomous moving device is controlled to travel toward the unmarked area to escape. When the above scenario occurs, a related sensor needs to quickly identify the above trapped situation. When the trapped situation is identified, according to a marking condition of the obstacle on the map, the autonomous moving device is controlled to travel toward the unmarked area to escape. By using this method, the trapped situation in the above scenario can be solved. Specifically, as shown in FIG. 14, the automatic working method comprises following steps:
S201: when it is detected that the autonomous moving device is trapped, obtaining the map, wherein the obstacle is marked in the map.

In one embodiment of the present application, when it is detected that the automatic lawn mower is trapped, a map of an area surrounding the lawn mower is obtained. A subsequent escape operation is executed according to the map.

In one embodiment of the present application, when it is identified that a collision occurs for more than a preset number of times, for example, for a camera of the lawn mower, a driving wheel of the lawn mower is locked, or a lift sensor provided on a universal wheel of the lawn mower detects that the lawn mower is lifted, it can be determined that the lawn mower is trapped. Alternatively, when the lawn mower is turning left, if a yaw angle value change detected by an IMU installed on the lawn mower is greater than a preset angle value, such as 540 degrees; and a longest side of a circumscribing rectangle of an operating route with the changed yaw angle value is smaller than or equal to a preset length value, such as 5m, it can be determined that the lawn mower is in a trapped scenario due to an inability to move out. When the lawn mower is in the trapped scenario due to the inability to move out, when a collision, a locking, or a lifting occurs once for the lawn mower, it can be determined that the lawn mower is trapped. When it is determined that the lawn mower is trapped in the above scenarios, a solution mentioned in the present application can be used to escape using the map of the area surrounding the lawn mower.

Further, when it is detected that the lawn mower is trapped, a local map centered on the lawn mower can be obtained, wherein the map is a rectangular area with a side length of 2m centered on a position of the lawn mower, and an initial value of a raster in the rectangular area is 0. When an obstacle is detected, a value in the raster can be updated, for example, updated to 1.

Further, the obstacle is marked in the map, and the boundary also belongs to the obstacle. In an embodiment of the present application, a position of the obstacle and a size of the obstacle in the map can be determined through the vision sensor, the obstacle detection sensor, or a related algorithm. Specifically, as shown in FIG. 15, when a sensor installed on the lawn mower detects at least one of a following fault types during travel, wherein the fault types comprise: detecting an obstacle, detecting that the machine is lifted, or detecting that a motor torque changes, an area near a geographical position of the sensor can be marked as an obstacle on the map. When the map is a raster map, a fixed number of rasters near the sensor can be marked as an obstacle, or a corresponding number of rasters can be marked as an obstacle according to the size of the obstacle or a size of the torque, and the larger the obstacle, the more rasters are marked. As shown in FIG. 15, when an obstacle detection sensor detects that the camera encounters an obstacle, 6 rasters K in front of a position of the camera can be marked as an obstacle; when the obstacle detection sensor detects that the universal wheel is lifted, 6 rasters in front of a position of the universal wheel can be marked as an obstacle. Of course, the obstacle can also be directly identified through an image collected by the vision sensor and marked at a corresponding position in the map.

When a traveling wheel motor torque of the lawn mower is greater than a preset threshold, a traveling speed of the lawn mower, a traveling direction of the lawn mower, and a first area covered on the map by the lawn mower are obtained; a second area covered on the map by the lawn mower after the lawn mower travels in the traveling direction at the traveling speed for a preset time is simulated; an area in the second area that is not covered by the first area is determined; and the uncovered area is marked as an obstacle. An area here can be a raster, and when the uncovered area is half a raster, to ensure safety, the whole raster is marked as an obstacle.

Further, according to the fault type identified by the sensor, an obstacle type can be marked while marking the obstacle in the map; and then, when the lawn mower cannot escape, an obstacle marking satisfying the obstacle type in the map is deleted; and the lawn mower is controlled to travel toward the unmarked area to escape. According to multiple tests by staff, at a position where a lifting is detected, a non-surmountable obstacle may not exist, so in some scenarios, it is not necessary to mark an obstacle in the map at the position where the lifting is detected. Compared with a case where a marking is performed upon a detection of a fault, using this method increases unmarked areas on the map, thereby greatly increasing a probability of the lawn mower to escape.

In the embodiments of the present application, when it is detected that the automatic lawn mower is trapped, the map of the area surrounding the lawn mower is obtained, and a subsequent escape operation is executed by controlling the lawn mower to travel to the area on the map that is not marked as an obstacle.

S202: obtaining an unmarked area on the map.

In the present application, obtaining the unmarked area on the map is obtaining an area with a raster value of 0 on the map.

In one embodiment of the present application, before the obstacle on the map is enlarged, the method comprises: obtaining a first search range of the obstacle in the map, wherein the first search range comprises: a range greater than a raster area covered by the autonomous moving device on the map; and determining an area covered by the autonomous moving device on the map when the autonomous moving device reaches an obstacle position in the first search range. That is, when it is detected that the lawn mower is trapped, a map of an area near the lawn mower is first obtained, and then, taking the position of the lawn mower as a center, an obstacle condition in a range greater than an area covered by the lawn mower in the raster map is obtained. For example, taking the position of the lawn mower as a center and taking a radius greater than a body length of the lawn mower, the obstacle condition in a circle on the raster map can be obtained.

Further, when a body of the lawn mower is divided into two parts with unequal front and rear lengths, corresponding search ranges of obstacles on the map can also be divided into two unequal parts, and obstacles in the two parts in the map are respectively searched. For example: a front part of the body covers 4 rasters in a length direction on the map, a rear part covers 8 rasters in the length direction on the map, and the body covers 10 rasters in a width direction on the map. Therefore, in a map corresponding to the front part of the body, a circle with a radius of 8 rasters (40cm) centered on the position of the lawn mower can be obtained to search for obstacle information; in a map corresponding to the rear part of the body, a circle with a radius of 10 rasters centered on the position of the lawn mower can be obtained to search for obstacle information.

Further, the first search range can also be determined according to a traveling direction when the lawn mower is detected to be trapped. That is, an obstacle in an area near a direction opposite to the traveling direction in the map is obtained. A calculation load of the lawn mower is reduced by setting the first search range. In one embodiment, when it is detected that the lawn mower is trapped, a linear velocity direction of the body is first obtained, and when the linear velocity direction is straight ahead, the obstacle information within a radius of 10 rasters centered on a machine position and in a rear direction is obtained.

In an embodiment, after the obstacle information is obtained, the autonomous moving device can be controlled to travel toward the uncovered area to escape by simulating an area covered by the autonomous moving device when the autonomous moving device is located at the obstacle position. An obstacle is marked in a raster of the map, and a plurality of rasters covered when the lawn mower reaches each raster are respectively simulated through an algorithm, so as to obtain uncovered rasters (rasters with a value of 0), so that the lawn mower can travel to these rasters to find a passable direction, without a need to control the lawn mower to collide and try randomly in various directions to discover a passable direction without an obstacle. Alternatively, the obstacle on the map can also be enlarged, and an enlargement factor is approximately equal to a covered raster area of the autonomous moving device on the map. Specifically, each raster in the obstacle is enlarged by an area of the autonomous moving device.

In another embodiment, in a predicament scenario as shown in FIG. 16, after the obstacle information is obtained, a plurality of rays can be drawn at equal angles within a 360-degree range centered on the lawn mower on the map as shown in FIG. 17, two adjacent rays determine a sector, and N sectors are obtained. A sector value in each direction is determined according to whether an obstacle exists in rasters covered by each sector, and when an obstacle exists, the sector value in that direction is marked as 1; and, a distance D of a nearest obstacle relative to the lawn mower in the rasters of the map covered by the sector in each direction is obtained. A number of sectors to be expanded for the sector is determined according to the distance D relative to the lawn mower obtained in each sector, a body width d, and a sector resolution (2pi/N). At this time, a calculation method for the number of sectors to be expanded for each sector is: (Arcsin(d/D))/ (2pi/N). The number of sectors to be expanded represents a number of sectors that will be covered when the lawn mower travels to the sector. For example: a calculated number of sectors is 2, then 4 sector values near a current sector can be marked as 1. A sector ray direction with a sector value of 0 is obtained, and the direction or a sector area can be a direction or an area where the lawn mower can escape. By simulating the area covered when the lawn mower reaches the obstacle through a sector, compared with an above embodiment of simulating covered rasters when a body is located at each obstacle, the simulation through a sector does not need to simulate all rasters covered when the machine travels to the obstacle, thus while ensuring that surrounding obstacles of the lawn mower are simulated and covered, no redundancy exists and an algorithm is simpler. Therefore, when the lawn mower detects a trapped situation, a direction to leave a predicament can be found faster.

In another embodiment of the present application, a plurality of traveling directions can also be randomly generated on the map taking the position of the lawn mower as a center, positions that will be reached after the lawn mower travels along these directions are simulated, and whether these positions overlap with an obstacle point (a raster value of 1) is identified; a traveling direction without overlap is selected; an evaluation parameter of each traveling direction without overlap is calculated, wherein the evaluation parameter is related to a distance between the position reached by the lawn mower after the simulation and the obstacle point, such as 80/(distance squared), and a direction with a small evaluation parameter is selected as the traveling direction of the machine to escape.

In the embodiments of the present application, the lawn mower obtains the unmarked area on the map by simulating the area covered on the map when the lawn mower reaches the obstacle through an algorithm or by enlarging the obstacle, etc.

S203: controlling the autonomous moving device to travel toward the unmarked area to escape.

In the embodiments of the present application, when the unmarked area on the map is obtained, the lawn mower is controlled to travel toward the unmarked area to escape.

In one embodiment of the present application, when a plurality of unmarked areas exist, the lawn mower is controlled to travel to a close area or direction to escape according to a distance between the lawn mower and the unmarked area. Preferably, when an unmarked area exists in front, the lawn mower travels directly forward.

When no unmarked area exists, obstacles in a direction opposite to an original direction on the map are obtained. As in the above embodiment, when it is detected that the lawn mower is trapped, a linear velocity direction of a body is first obtained, and when the linear velocity direction is straight ahead, the obstacle information within a radius of 10 rasters centered on the machine position and in a rear direction is obtained. When there are obstacles in a range with a radius of 10 rasters directly behind, the obstacle information within a radius of 8 rasters directly in front is obtained.

When no uncovered area exists on the map, a second search range of the obstacle in the map can also be obtained, wherein the second search range is greater than an area covered by the autonomous moving device on the map, and the second search range is smaller than the first search range; and an area covered on the map when the autonomous moving device reaches the obstacle position in the second search range is determined. That is, when there are obstacles in a search range in front and rear directions of the lawn mower on the map, the search range is reduced, but the search range is greater than the body of the lawn mower.

After the target traveling area is determined, a distance between a current traveling direction of the autonomous moving device and the target traveling area is obtained; a traveling angular velocity and a traveling linear velocity when the lawn mower travels toward the target traveling area are determined according to the distance, wherein the traveling angular velocity is positively correlated with the distance, and the linear velocity is negatively correlated with the distance; and the lawn mower is controlled to travel toward the target traveling area to escape according to the traveling angular velocity and the traveling linear velocity. For example: for the above sector embodiment, when a distance between a current direction of the lawn mower and a target ray direction is greater than N/4, the linear velocity is set to 0.03m/s, and the angular velocity is set to 0.025m/s × d; when the distance between the current direction of the lawn mower and the target ray direction is smaller than N/4 and greater than N/6, the linear velocity is set to 0.05m/s, and the angular velocity is set to 0.02m/s × d. Through this velocity setting method, the lawn mower turns to the target position or the target direction faster when a position change is relatively small.

In the embodiments of the present application, during an escape process, when a search range selected for a first time contains an unmarked area that allows an escape, only obstacle information in the search range is obtained all the time in the subsequent travel process. For example: when it is determined that the lawn mower is trapped and an unmarked area exists behind the lawn mower on the map, then in the subsequent escape process, only the map within a rear search range is obtained. Through this method, the machine is controlled to escape toward a same direction continuously, preventing a defect of back-and-forth oscillation of the lawn mower, where, for example, the machine chooses to travel forward because an unmarked area exists in front of the lawn mower at one moment, and chooses to travel backward because an unmarked area exists behind the lawn mower at another moment.

After it is detected that the autonomous moving device is trapped, if the autonomous moving device travels at least a first preset distance without detecting an abnormality when performing an escape action, it is determined that the autonomous moving device successfully escapes. For example: during an execution of an obstruction, when a real collision is resolved and the machine travels 15cm, a single obstruction is determined to end.

In one embodiment of the present application, if a collision is still detected during the escape process, a marking of an obstacle is continued on the map in the above method.

Further, after it is determined that the autonomous moving device successfully escapes, an area covered in the map when the autonomous moving device is detected to be trapped is marked as an obstacle, so as to avoid re-entering the trapped area during the subsequent travel process, which leads to a decrease in the working efficiency.

After it is determined that the autonomous moving device successfully escapes, when it is detected that the autonomous moving device travels to a second preset distance from the trapped position, the obstacle marked on the map by the sensor installed on the autonomous moving device due to the detection of the fault is deleted. For example, after it is determined that the lawn mower successfully escapes, when the machine is detected to travel to a distance of 5m from the trapped position, an obstacle marked due to an abnormal condition such as a camera collision, a torque change, or a universal wheel lifting is deleted. When an accuracy of the map is low, an accuracy of an obstacle marking position will also decrease as a traveling time of the lawn mower increases, so the obstacle marking position can be deleted, and because the vision sensor will update data with a captured image, the obstacle marked by the vision sensor can be retained.

In one embodiment of the present application, in the inner right angle scenario as shown in FIG. 13, when multiple collisions are detected, if the above sector embodiment is adopted, a marking condition of sectors in the right half of the lawn mower on the map can be determined. When sectors marked as 1 in the right half are respectively distributed on two sides of the right half, a center point of the raster marked as 0 is obtained as the target direction, and the machine is controlled to travel to the target direction by means of backward arcing to escape.

In another embodiment of the present application, when it is detected that in sectors corresponding to the search range, more than half of sectors are marked as 1 and less than half of sectors are marked as 0, it indicates that the machine is likely in an edge-following process as shown in FIG. 18. At this time, a collision may occur continuously during travel due to a low accuracy of the vision sensor causing the lawn mower to identify the boundary for a moment and fail to identify the boundary for another moment. At this time, a direction at 2/3 of a side with fewer sectors can be taken as the target direction, and the machine is controlled to travel to the target direction to escape.

In a case where these two scenarios are detected during an escape, if the machine travels 1m after a real collision is resolved, or travels 0.75m in a case of a deflection of 30 degrees, it is determined that an escape is successful.

The autonomous moving device obtains the unmarked area on the map and controls the autonomous moving device to travel toward the unmarked area to escape when it is detected that the autonomous moving device is trapped. When the above scenario occurs, a related sensor needs to quickly identify the above trapped situation. When the trapped situation is identified, according to the marking condition of the obstacle on the map, the autonomous moving device is controlled to travel toward the unmarked area to escape. By using this method, the trapped situation in the above scenario can be solved.

A method of how an autonomous moving device detects a slipping condition is described below.

In one embodiment, an autonomous moving device can detect a slipping condition based on an image. If image feature points change little within 6s continuously, it can indicate that the autonomous moving device enters a slipping condition. At this time, external manifestations of the slipping condition can comprise that both wheels of the autonomous moving device slip and spin, resulting in the machine almost not moving.

In one embodiment, an autonomous moving device can also respectively detect a pose change of the machine based on the IMU and the ODO, and when values are inconsistent, it can indicate that the autonomous moving device enters a slipping condition. At this time, the external manifestation of the slipping condition can comprise that one wheel slips and spins.

In one embodiment, during travel of the autonomous moving device, a driving motor torque of driving the wheel to travel is obtained. A plurality of motor torques within a preset time period (such as 2s) are intercepted respectively, and when it is identified that a change rate of a motor torque within the preset time period is greater than a preset threshold, the plurality of motor torques and the duration of detecting the motor torque are detected. When a motor torque is detected to be greater than a first preset value (such as 40 N·m) for a continuous first preset time period (such as 0.1s), it can be determined that the machine slips/locks; when a motor torque is detected to be greater than a second preset value (30 N·m) for a continuous second preset time period (0.6s), it is determined that the machine slips/locks; when a motor torque is detected to be smaller than the second preset value (such as 30 N·m), no instruction is output. The first preset time period is smaller than the second preset time period, and the first preset value is greater than the second preset value. In this embodiment, when a method in a previous embodiment of detecting a pose change during straight travel of the machine through the IMU and the ODO is used to determine whether a slipping occurs, because the IMU may not detect an angle change when the machine travels straight, the detection result of the IMU is consistent with that of the ODO, resulting in an inability to identify a slipping. This embodiment can supplement the detection result of the previous embodiment. Further, because the locking can be determined by whether left and right wheel motors stall, in most cases, a torque has not started to rise when the motor stalls, and a torque change rate is not large. Therefore, in most cases, what is identified by using a torque change rate determination method in this embodiment is a slipping, that is, when a slipping/locking is detected by using the method in this embodiment, a processing method corresponding to a slipping can be prioritized.

Further, before obtaining the driving motor torque of driving the wheel to travel, whether the robot is in at least one of a following condition is detected: a startup stage, an acceleration/deceleration stage, or an uphill/downhill stage. Because motor torques in these conditions are roughly same as a motor torque in a slipping condition, the robot can be controlled to ignore the driving motor torque when the robot is in these conditions, thereby avoiding misidentifying these conditions as a slipping or a locking. Specifically, through obtaining a motor torque or a wheel rotational speed, when the motor torque or the wheel rotational speed changes from 0 to non-zero, the machine is in a startup stage; when a difference between velocities of the robot at adjacent moments satisfies a preset threshold (such as 8m/s), or the robot changes from traveling in a reverse direction to traveling in a forward direction, the robot is in an acceleration/deceleration stage; when the robot is identified to be at a position with a slope greater than a preset threshold (more than 25 degrees) through the IMU, the machine is in an uphill/downhill stage.

A control step executed by the autonomous moving device when the autonomous moving device enters the slipping condition is described below.

In one embodiment, when the autonomous moving device enters the slipping condition, extreme processing methods such as moving backward, rotating, and twisting can be executed.

In one embodiment, a processing priority of the slipping condition is higher than a processing priority of an obstructed escape condition.

In one embodiment, a processing priority of the slipping condition is lower than a processing priority of an obstructed escape condition.

In addition, an embodiment further provides a computer-readable storage medium, wherein the storage medium stores the computer program, and the computer program is configured to execute the above method.

In addition, an embodiment further provides an autonomous moving device, comprising: a processor; a memory for storing a processor-executable instruction; and the processor, configured to execute the above method.

A control step executed by the autonomous moving device when a dense grass condition is detected is described below.

In one embodiment, in a case where the load of the robot is identified to be large, the lawn mower is first controlled to reduce a movement speed, and when it is detected that the load becomes small after the lawn mower reduces the speed, the lawn mower is controlled to continue to advance. A method of identifying that the load is large comprises: detecting that the motor torque is greater than a preset threshold or a cutterhead rotational speed is low. When it is detected that the rotational speed of the cutterhead is still low after the lawn mower reduces the speed, the machine is controlled to move backward. When the cutterhead rotational speed increases after the machine moves backward, the machine is controlled to move forward slowly; when the cutterhead rotational speed is still low after the machine moves backward, the machine is controlled to change a movement direction. Further, when the cutterhead rotational speed is still low after the machine moves backward, the machine is controlled to pause and an alarm is issued. In this embodiment, when the robot moves on a dense grass, the robot is timely controlled to perform the operation to drive away from the dense grass, so as to avoid triggering a thermal protection of the robot and prevent the robot from stopping.

It should be understood that, drawings of the present application are only schematic illustrations of a process included in a method according to an exemplary embodiment of the present application, and are not for a limiting purpose. A person of ordinary skill in the art can easily understand that, a process shown in the drawings of the present application does not indicate or limit a chronological order of the process. In addition, the process can be, for example, executed synchronously or asynchronously in a plurality of modules, which can also be easily understood.

Various technical features of the above embodiments may be combined in any manner. To make a description concise, all possible combinations of the various technical features in the above embodiments are not described; however, as long as a combination of the technical features does not have a contradiction, the combination shall be considered as within a scope recorded in the present specification.

The above embodiments only express several implementation manners of the present application, and its description is relatively specific and detailed, but the description shall not be understood as a limitation to a patent scope of the present application. A person of ordinary skill in the art can also make several variations and improvements without departing from a concept of the present application, and these all belong to a protection scope of the present application.

## Claims

1. An autonomous robot, comprising:
a sensor, configured to collect environmental information;
a memory, configured to store a map of a working area surrounding a current position of the autonomous robot; and
a processor, wherein the processor is in signal communication with the sensor and the memory, and the processor is configured to: determine that the autonomous robot encounters an obstacle based on the environmental information, wherein the obstacle includes a non-working object;
in response to the autonomous robot encountering the obstacle, control the autonomous robot to turn;
record a position of the autonomous robot in the map when the autonomous robot is turning, wherein the position is a turning position; and
in response to detecting that the autonomous robot performs multiple turnings within a limited time or area, control the autonomous robot to move in a direction away from an area formed by a plurality of turning positions to escape, wherein the plurality of turning positions correspond to the multiple turnings.

2. The autonomous robot according to claim 1, wherein, to detect that the autonomous robot performs the multiple turnings within the limited time or area, the processor is configured to:
detect that a distribution density of the plurality of turning positions is greater than a preset threshold.

3. The autonomous robot according to claim 1 or 2, wherein, to detect that the distribution density of the plurality of turning positions is greater than the preset threshold, the processor is configured to:
detect that an area of a region formed by N consecutive turning positions is smaller than a first preset threshold, or detect that an area of a region formed by N consecutive turning positions has a sudden change and is smaller than an area of a region formed by other N consecutive turning positions, wherein N is greater than or equal to 3.

4. The autonomous robot according to claim 1 or 2, wherein, to detect that the distribution density of the plurality of turning positions is greater than the preset threshold, the processor is configured to:
detect that distances between N consecutive turning positions are smaller than a second preset threshold, wherein N is greater than or equal to 3.

5. The autonomous robot according to any one of claims 1 to 4, wherein the processor is further configured to:
record a time when the autonomous robot turns or a sequence of the plurality of turning positions.

6. The autonomous robot according to claim 5, wherein, to control the autonomous robot to move in the direction away from the area formed by the plurality of turning positions to escape, the processor is configured to:
generate an escape path based on the current position of the autonomous robot and a target turning position prior to the plurality of turning positions; and
control the autonomous robot to move along the escape path.

7. The autonomous robot according to claim 6, wherein, to generate the escape path based on the current position of the autonomous robot and the target turning position prior to the plurality of turning positions, the processor is configured to:
when reaching the current position, in response to detecting that an area of a region formed by N consecutive turning positions is smaller than an area of a region formed by other N consecutive turning positions, obtain an earliest-recorded turning position in the detected region with the larger area as the target turning position; and
generate the escape path based on the current position and the target turning position.

8. The autonomous robot according to claim 6, wherein, to generate the escape path based on the current position of the autonomous robot and the target turning position prior to the plurality of turning positions, the processor is configured to:
when reaching the current position, in response to detecting that an area of a region formed by N consecutive turning positions is greater than a third preset threshold, obtain an earliest-recorded turning position in the detected region as the target turning position; and
generate the escape path based on the current position and the target turning position.

9. The autonomous robot according to any one of claims 1 to 8, wherein the processor is further configured to:
record a movement path when the autonomous robot moves.

10. The autonomous robot according to claim 9, wherein, to generate the escape path based on the current position of the autonomous robot and a turning position prior to the plurality of turning positions, the processor is configured to:
obtain a shortest path in the movement path that passes through the current position and the target turning position, and use the shortest path as the escape path.

11. The autonomous robot according to any one of claims 6 to 10, wherein, to control the autonomous robot to move along the escape path, the processor is configured to:
during a process of controlling the autonomous robot to move along the escape path, if no obstacle is identified through real-time collected sensor data within a preset time period, determine that an escape is successful.

12. The autonomous robot according to any one of claims 1 to 11, wherein the processor is further configured to:
in response to the autonomous robot escaping successfully, set a region containing the plurality of turning positions as a restricted area on the map; and
when detecting that the autonomous robot reaches the restricted area, control the autonomous robot to turn or move along a boundary of the restricted area.

13. The autonomous robot according to any one of claims 1 to 12, wherein the processor is further configured to:
in response to the autonomous robot failing to escape, control the autonomous robot to move along a boundary of the obstacle; and
during a movement, identify an obstacle-free area through collected sensor data, and control the autonomous robot to travel to the obstacle-free area to enable the autonomous robot to escape, wherein the obstacle-free area is a spatial region where distances between obstacles are not smaller than a body width of the autonomous robot.

14. The autonomous robot according to any one of claims 1 to 13, wherein the processor is further configured to:
in response to the autonomous robot failing to escape, control the autonomous robot to move along a boundary of the obstacle; and
when identifying through collected sensor data during a movement that the autonomous robot moves to a vicinity of the target turning position, determine that the autonomous robot escapes successfully.

15. The autonomous robot according to any one of claims 1 to 14, wherein the processor is further configured to:
in response to the autonomous robot escaping successfully, control the autonomous robot to enter a random mode; wherein in the random mode, the autonomous robot randomly moves in a direction until the obstacle is identified.

16. The autonomous robot according to any one of claims 1 to 15, wherein the sensor comprises at least one of an imaging sensor, an ultrasonic sensor, a laser sensor, or a radar sensor.

17. The autonomous robot according to any one of claims 1 to 16, wherein the map is periodically updated.

18. A path planning method applied to an autonomous robot, the method comprising:
determining that the autonomous robot encounters an obstacle based on environmental information, wherein the obstacle includes a non-working object;
in response to the autonomous robot encountering the obstacle, controlling the autonomous robot to turn;
recording a position of the autonomous robot in a map when the autonomous robot is turning, wherein the position is a turning position; and
in response to detecting that the autonomous robot performs multiple turnings within a limited time or area, controlling the autonomous robot to move in a direction away from an area formed by a plurality of turning positions to escape, wherein the plurality of turning positions correspond to the multiple turnings.
